(19) Europäisches Patentamt / European Patent Office / Office européen des brevets

(11) **EP 4 510 564 A1**

(12) **EUROPEAN PATENT APPLICATION**
published in accordance with Art. 153(4) EPC

(43) Date of publication:
**19.02.2025 Bulletin 2025/08**

(21) Application number: **23788595.9**

(22) Date of filing: **12.04.2023**

(51) International Patent Classification (IPC):
$H04N\ 19/105^{(2014.01)}$    $H04N\ 19/176^{(2014.01)}$
$H04N\ 19/132^{(2014.01)}$    $H04N\ 19/88^{(2014.01)}$

(52) Cooperative Patent Classification (CPC):
H04N 19/105; H04N 19/132; H04N 19/176;
H04N 19/88

(86) International application number:
**PCT/KR2023/004932**

(87) International publication number:
**WO 2023/200246 (19.10.2023 Gazette 2023/42)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **12.04.2022 US 202263330278 P**

(71) Applicant: **LG Electronics Inc.**
**Yeongdeungpo-gu**
**Seoul 07336 (KR)**

(72) Inventors:
• **JANG, Hyeong Moon**
 **Seoul 06772 (KR)**
• **NAM, Jung Hak**
 **Seoul 06772 (KR)**

(74) Representative: **Frenkel, Matthias Alexander**
**Wuesthoff & Wuesthoff**
**Patentanwälte und Rechtsanwalt PartG mbB**
**Schweigerstraße 2**
**81541 München (DE)**

(54) **IMAGE ENCODING/DECODING METHOD, BITSTREAM TRANSMISSION METHOD, AND RECORDING MEDIUM STORING BITSTREAM THEREIN**

(57)    An image encoding/decoding method, a bitstream transmission method, and a computer-readable recording medium storing the bitstream therein are provided. The image decoding method according to the present disclosure, which is an image decoding method performed by an image decoding device, may comprise the steps of: constructing a prediction candidate list for a current block; deriving an error value for the current block on the basis of whether a reference picture referred to by a prediction candidate in the prediction candidate list is a resampled reference picture; and reordering an order of the prediction candidates in the prediction candidate list on the basis of the error value, wherein the error value is derived to a predetermined value on the basis of the reference picture being a resampled reference picture.

FIG. 16

## Description

### Technical Field

The present disclosure relates to an image encoding/decoding method, a method of transmitting a bitstream and a recording medium storing a bitstream, and, more particularly, to a method of setting a template matching error value depending on whether to apply reference picture resampling.

### Background Art

Recently, demand for high-resolution and high-quality images such as high definition (HD) images and ultra high definition (UHD) images is increasing in various fields. As resolution and quality of image data are improved, the amount of transmitted information or bits relatively increases as compared to existing image data. An increase in the amount of transmitted information or bits causes an increase in transmission cost and storage cost.

Accordingly, there is a need for high-efficient image compression technology for effectively transmitting, storing and reproducing information on high-resolution and high-quality images.

### Disclosure

### Technical Problem

An object of the present disclosure is to provide an image encoding/decoding method and apparatus with improved encoding/decoding efficiency.

Another object of the present disclosure is to provide a method of performing inter prediction using template matching.

Another object of the present disclosure is to provide a method of setting a template matching error value depending on whether to apply reference picture resampling.

Another object of the present disclosure is to set a priority of a prediction candidate to be relatively low without calculating a template matching error value of the prediction candidate when a reference picture of the prediction candidate is a reference picture to which reference picture resampling is applied.

Another object of the present disclosure is to provide a non-transitory computer-readable recording medium storing a bitstream generated by an image encoding method according to the present disclosure.

Another object of the present disclosure is to provide a non-transitory computer-readable recording medium storing a bitstream received, decoded and used to reconstruct an image by an image decoding apparatus according to the present disclosure.

Another object of the present disclosure is to provide a method of transmitting a bitstream generated by an image encoding method according to the present disclosure.

The technical problems solved by the present disclosure are not limited to the above technical problems and other technical problems which are not described herein will become apparent to those skilled in the art from the following description.

### Technical Solution

An image decoding method according to an aspect of the present disclosure is an image decoding method performed by an image decoding apparatus. The image decoding method may comprise constructing a prediction candidate list for a current block, deriving an error value for the current block based on whether a reference picture referred to by a prediction candidate in the prediction candidate list is a resampled reference picture, and reordering the order of the prediction candidate in the prediction candidate list based on the error value. The error value may be derived to be a predetermined value based on the reference picture being the resampled reference picture.

An image encoding method according to another aspect of the present disclosure is an image encoding method performed by an image encoding apparatus. The image encoding method may comprise constructing a prediction candidate list for a current block, deriving an error value for the current block based on whether a reference picture referred to by a prediction candidate in the prediction candidate list is a resampled reference picture, and reordering the order of the prediction candidate in the prediction candidate list based on the error value. The error value may be derived to be a predetermined value based on the reference picture being the resampled reference picture.

A computer-readable recording medium according to another aspect of the present disclosure can store a bitstream generated by the image encoding method or apparatus of the present disclosure.

A transmission method according to another aspect of the present disclosure may transmit a bitstream generated by the image encoding method or apparatus of the present disclosure.

The features briefly summarized above with respect to the present disclosure are merely exemplary aspects of the detailed description below of the present disclosure, and do not limit the scope of the present disclosure.

**Advantageous Effects**

According to the present disclosure, it is possible to provide an image encoding/decoding method and apparatus with improved encoding/decoding efficiency.

Also, according to the present disclosure, a method of performing inter prediction using template matching can be provided.

Also, according to the present disclosure, since a low priority is assigned to a prediction candidate of a reference picture to which reference picture resampling is applied, errors occurring during a reference picture resampling process are not reflected in a prediction process of a current block, so that prediction of the current block can be implemented more accurately.

Also, according to the present disclosure, it is possible to provide a non-transitory computer-readable recording medium storing a bitstream generated by an image encoding method according to the present disclosure.

Also, according to the present disclosure, it is possible to provide a non-transitory computer-readable recording medium storing a bitstream received, decoded and used to reconstruct an image by an image decoding apparatus according to the present disclosure.

Also, according to the present disclosure, it is possible to provide a method of transmitting a bitstream generated by an image encoding method according to the present disclosure.

It will be appreciated by persons skilled in the art that that the effects that can be achieved through the present disclosure are not limited to what has been particularly described hereinabove and other advantages of the present disclosure will be more clearly understood from the detailed description.

**Description of Drawings**

FIG. 1 is a view schematically showing a video coding system, to which an embodiment of the present disclosure is applicable.

FIG. 2 is a view schematically showing an image encoding apparatus, to which an embodiment of the present disclosure is applicable.

FIG. 3 is a view schematically showing an image decoding apparatus, to which an embodiment of the present disclosure is applicable.

FIG. 4 is a view schematically showing an inter prediction unit of an image encoding apparatus.

FIG. 5 is a flowchart illustrating a method of decoding an image based on inter prediction.

FIG. 6 is a view schematically showing an inter prediction unit of an image decoding apparatus.

FIG. 7 is a flowchart illustrating a method of decoding an image based on inter prediction.

FIG. 8 is a flowchart illustrating an inter prediction method.

FIG. 9 is a view illustrating an MMVD mode.

FIGS. 10 to 12 are views illustrating an affine mode.

FIGS. 13 to 15 are views illustrating template matching and template matching based reordering.

FIG. 16 is a flowchart showing an image encoding/decoding method according to an embodiment of the present disclosure.

FIG. 17 is a flowchart showing an image encoding/decoding method according to another embodiment of the present disclosure.

FIG. 18 is a flowchart showing an image encoding/decoding method according to another embodiment of the present disclosure.

FIG. 19 is a flowchart showing an image encoding/decoding method according to another embodiment of the present disclosure.

FIG. 20 is a flowchart showing an image encoding/decoding method according to another embodiment of the present disclosure.

FIG. 21 is a view showing a content streaming system to which an embodiment of the present disclosure is applicable.

**Mode for Invention**

Hereinafter, the embodiments of the present disclosure will be described in detail with reference to the accompanying drawings so as to be easily implemented by those skilled in the art. However, the present disclosure may be implemented in various different forms, and is not limited to the embodiments described herein.

In describing the present disclosure, if it is determined that the detailed description of a related known function or construction renders the scope of the present disclosure unnecessarily ambiguous, the detailed description thereof will be omitted. In the drawings, parts not related to the description of the present disclosure are omitted, and similar reference numerals are attached to similar parts.

In the present disclosure, when a component is "connected", "coupled" or "linked" to another component, it may include not only a direct connection relationship but also an indirect connection relationship in which an intervening component is present. In addition, when a component "includes" or "has" other components, it means that other components may be further included, rather than excluding other components unless otherwise stated.

In the present disclosure, the terms first, second, etc. may be used only for the purpose of distinguishing one component from other components, and do not limit the order or importance of the components unless otherwise stated. Accordingly, within the scope of the present disclosure, a first component in one embodiment may be referred to as a second component in another embodiment, and similarly, a second component in one embodiment may be referred to as a first component in another embodiment.

In the present disclosure, components that are distinguished from each other are intended to clearly describe each feature, and do not mean that the components are necessarily separated. That is, a plurality of components may be integrated and implemented in one hardware or software unit, or one component may be distributed and implemented in a plurality of hardware or software units. Therefore, even if not stated otherwise, such embodiments in which the components are integrated or the component is distributed are also included in the scope of the present disclosure.

In the present disclosure, the components described in various embodiments do not necessarily mean essential components, and some components may be optional components. Accordingly, an embodiment consisting of a subset of components described in an embodiment is also included in the scope of the present disclosure. In addition, embodiments including other components in addition to components described in the various embodiments are included in the scope of the present disclosure.

The present disclosure relates to encoding and decoding of an image, and terms used in the present disclosure may have a general meaning commonly used in the technical field, to which the present disclosure belongs, unless newly defined in the present disclosure.

In the present disclosure, "picture" generally means the basis representing one image in a particular time period, and a slice/tile is an encoding basis constituting a part of a picture. One picture may be composed of one or more slices/tiles. In addition, a slice/tile may include one or more coding tree units (CTUs).

In the present disclosure, a "pixel" or a "pel" may mean a smallest unit constituting one picture (or image). In addition, "sample" may be used as a term corresponding to a pixel. A sample may generally represent a pixel or a value of a pixel, and may represent only a pixel/pixel value of a luma component or only a pixel/pixel value of a chroma component.

In the present disclosure, a "unit" may represent a basic unit of image processing. The unit may include at least one of a specific region of the picture and information related to the region. One unit may include one luma block and two chroma (e.g., Cb, Cr) blocks. The unit may be used interchangeably with terms such as "sample array", "block" or "area" in some cases. In a general case, an $M \times N$ block may include samples (or sample arrays) or a set (or array) of transform coefficients of M columns and N rows.

In the present disclosure, "current block" may mean one of "current coding block", "current coding unit", "coding target block", "decoding target block" or "processing target block". When prediction is performed, "current block" may mean "current prediction block" or "prediction target block". When transform (inverse transform)/quantization (dequantization) is performed, "current block" may mean "current transform block" or "transform target block". When filtering is performed, "current block" may mean "filtering target block".

In addition, in the present disclosure, a "current block" may mean a block including both a luma component block and a chroma component block or "a luma block of a current block" unless explicitly stated as a chroma block. The luma component block of the current block may be expressed by including an explicit description of a luma component block such as "luma block" or "current luma block. In addition, the "chroma component block of the current block" may be expressed by including an explicit description of a chroma component block, such as "chroma block" or "current chroma block".

In the present disclosure, the term "/" and "," should be interpreted to indicate "and/or". For instance, the expression "A/B" and "A, B" may mean "A and/or B." Further, "A/B/C" and "A, B, C" may mean "at least one of A, B, and/or C."

In the present disclosure, the term "or" should be interpreted to indicate "and/or." For instance, the expression "A or B" may comprise 1) only "A", 2) only "B", and/or 3) both "A and B". In other words, in the present disclosure, the term "or" should be interpreted to indicate "additionally or alternatively."

## Overview of video coding system

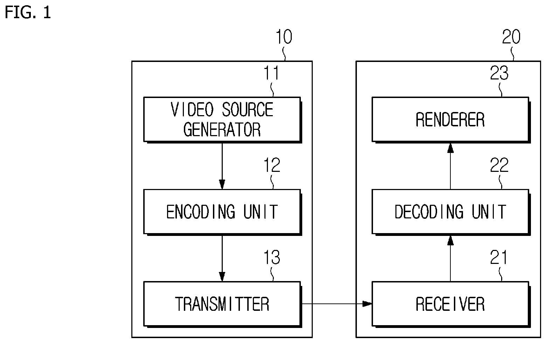

FIG. 1 is a view showing a video coding system to which an embodiment of the present disclosure is applicable.

The video coding system according to an embodiment may include an encoding apparatus 10 and a decoding apparatus 20. The encoding apparatus 10 may deliver encoded video and/or image information or data to the decoding apparatus 20 in the form of a file or streaming via a digital storage medium or network.

The encoding apparatus 10 according to an embodiment may include a video source generator 11, an encoding unit(encoder) 12 and a transmitter 13. The decoding apparatus 20 according to an embodiment may include a receiver 21, a decoding unit(decoder) 22 and a renderer 23. The encoding unit 12 may be called a video/image encoding apparatus, and the decoding unit 22 may be called a video/image decoding apparatus. The transmitter 13 may be included in the encoding unit 12. The receiver 21 may be included in the decoding unit 22. The renderer 23 may include a display and the display may be configured as a separate device or an external component.

The video source generator 11 may acquire a video/image through a process of capturing, synthesizing or generating the video/image. The video source generator 11 may include a video/image capture device and/or a video/-image generating device. The video/image capture device may include, for example, one or more cameras, video/image archives including previously captured video/images, and the like. The video/image generating device may include, for example, computers, tablets and smartphones, and may (electronically) generate video/images. For example, a virtual video/image may be generated through a computer or the like. In this case, the video/image capturing process may be replaced by a process of generating related data.

The encoding unit 12 may encode an input video/image. The encoding unit 12 may perform a series of procedures such as prediction, transform, and quantization for compression and coding efficiency. The encoding unit 12 may output encoded data (encoded video/image information) in the form of a bitstream.

The transmitter 13 may obtain the encoded video/image information or data output in the form of a bitstream and forward it to the receiver 21 of the decoding apparatus 20 or another external object through a digital storage medium or a network in the form of a file or streaming. The digital storage medium may include various storage mediums such as USB, SD, CD, DVD, Blu-ray, HDD, SSD, and the like. The transmitter 13 may include an element for generating a media file through a predetermined file format and may include an element for transmission through a broadcast/communication network. The transmitter 13 may be provided as a transmission device separate from the encoding apparatus 12, and in this case, the transmission device may include at least one processor that acquires encoded video/image information or data output in the form of a bitstream and a transmission unit for transmitting it in the form of a file or streaming. The receiver 21 may extract/receive the bitstream from the storage medium or network and transmit the bitstream to the decoding unit 22.

The decoding unit 22 may decode the video/image by performing a series of procedures such as dequantization, inverse transform, and prediction corresponding to the operation of the encoding unit 12.

The renderer 23 may render the decoded video/image. The rendered video/image may be displayed through the display.

## Overview of image encoding apparatus

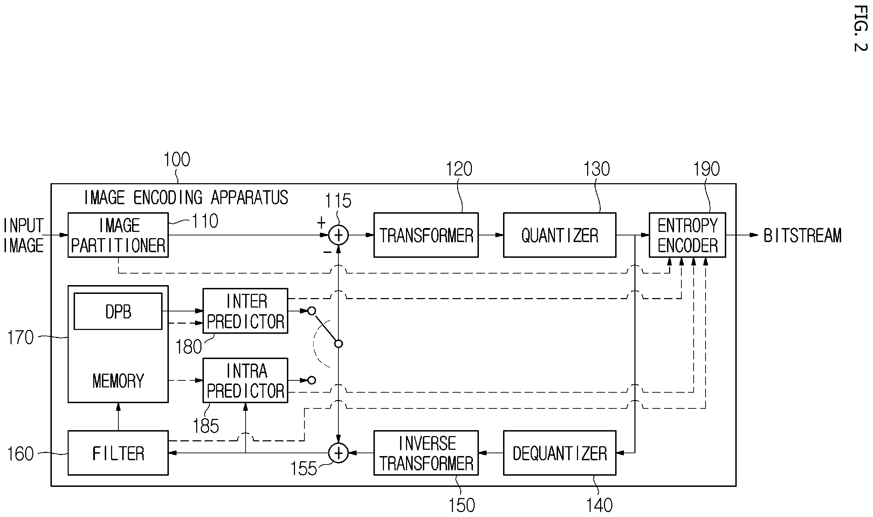

FIG. 2 is a view schematically showing an image encoding apparatus, to which an embodiment of the present disclosure is applicable.

As shown in FIG. 2, the image encoding apparatus 100 may include an image partitioner 110, a subtractor 115, a transformer 120, a quantizer 130, a dequantizer 140, an inverse transformer 150, an adder 155, a filter 160, a memory 170, an inter prediction unit 180, an intra prediction unit 185 and an entropy encoder 190. The inter prediction unit 180 and the intra prediction unit 185 may be collectively referred to as a "prediction unit". The transformer 120, the quantizer 130, the dequantizer 140 and the inverse transformer 150 may be included in a residual processor. The residual processor may further include the subtractor 115.

All or at least some of the plurality of components configuring the image encoding apparatus 100 may be configured by one hardware component (e.g., an encoder or a processor) in some embodiments. In addition, the memory 170 may include a decoded picture buffer (DPB) and may be configured by a digital storage medium.

The image partitioner 110 may partition an input image (or a picture or a frame) input to the image encoding apparatus 100 into one or more processing units. For example, the processing unit may be called a coding unit (CU). The coding unit may be acquired by recursively partitioning a coding tree unit (CTU) or a largest coding unit (LCU) according to a quad-tree binary-tree ternary-tree (QT/BT/TT) structure. For example, one coding unit may be partitioned into a plurality of coding units of a deeper depth based on a quad tree structure, a binary tree structure, and/or a ternary structure. For partitioning of the coding unit, a quad tree structure may be applied first and the binary tree structure and/or ternary structure may be applied later. The coding procedure according to the present disclosure may be performed based on the final coding unit that is no longer partitioned. The largest coding unit may be used as the final coding unit or the coding unit of deeper depth acquired by partitioning the largest coding unit may be used as the final coding unit. Here, the coding procedure may include a procedure of prediction, transform, and reconstruction, which will be described later. As another example, the processing unit of the coding procedure may be a prediction unit (PU) or a transform unit (TU). The prediction unit and the transform unit may be split or partitioned from the final coding unit. The prediction unit may be a unit of sample prediction, and the transform unit may be a unit for deriving a transform coefficient and/or a unit for deriving a residual signal from the transform coefficient.

The prediction unit (the inter prediction unit 180 or the intra prediction unit 185) may perform prediction on a block to be processed (current block) and generate a predicted block including prediction samples for the current block. The prediction unit may determine whether intra prediction or inter prediction is applied on a current block or CU basis. The prediction unit may generate various information related to prediction of the current block and transmit the generated information to the entropy encoder 190. The information on the prediction may be encoded in the entropy encoder 190 and output in the form of a bitstream.

The intra prediction unit(intra predictor) 185 may predict the current block by referring to the samples in the current picture. The referred samples may be located in the neighborhood of the current block or may be located apart according to the intra prediction mode and/or the intra prediction technique. The intra prediction modes may include a plurality of non-directional modes and a plurality of directional modes. The non-directional mode may include, for example, a DC mode and a planar mode. The directional mode may include, for example, 33 directional prediction modes or 65 directional prediction modes according to the degree of detail of the prediction direction. However, this is merely an example, more or less directional prediction modes may be used depending on a setting. The intra prediction unit 185 may determine the prediction mode applied to the current block by using a prediction mode applied to a neighboring block.

The inter prediction unit(inter predictor) 180 may derive a predicted block for the current block based on a reference block (reference sample array) specified by a motion vector on a reference picture. In this case, in order to reduce the amount of motion information transmitted in the inter prediction mode, the motion information may be predicted in units of blocks, subblocks, or samples based on correlation of motion information between the neighboring block and the current block. The motion information may include a motion vector and a reference picture index. The motion information may further include inter prediction direction (L0 prediction, L1 prediction, Bi prediction, etc.) information. In the case of inter prediction, the neighboring block may include a spatial neighboring block present in the current picture and a temporal neighboring block present in the reference picture. The reference picture including the reference block and the reference picture including the temporal neighboring block may be the same or different. The temporal neighboring block may be called a collocated reference block, a co-located CU (colCU), and the like. The reference picture including the temporal neighboring block may be called a collocated picture (colPic). For example, the inter prediction unit 180 may construct a motion information candidate list based on neighboring blocks and generate information indicating which candidate is used to derive a motion vector and/or a reference picture index of the current block. Inter prediction may be performed based on various prediction modes. For example, in the case of a skip mode and a merge mode, the inter prediction unit 180 may use motion information of the neighboring block as motion information of the current block. In the case of the skip mode, unlike the merge mode, the residual signal may not be transmitted. In the case of the motion vector prediction (MVP) mode, the motion vector of the neighboring block may be used as a motion vector predictor, and the motion vector of the current block may be signaled by encoding a motion vector difference and an indicator for a motion vector predictor. The motion vector difference may mean a difference between the motion vector of the current block and the motion vector predictor.

The prediction unit may generate a prediction signal based on various prediction methods and prediction techniques described below. For example, the prediction unit may not only apply intra prediction or inter prediction but also simultaneously apply both intra prediction and inter prediction, in order to predict the current block. A prediction method of simultaneously applying both intra prediction and inter prediction for prediction of the current block may be called combined inter and intra prediction (CIIP). In addition, the prediction unit may perform intra block copy (IBC) for prediction of the current block. Intra block copy may be used for content image/video coding of a game or the like, for example, screen content coding (SCC). IBC is a method of predicting a current picture using a previously reconstructed reference block in the current picture at a location apart from the current block by a predetermined distance. When IBC is applied, the location of the reference block in the current picture may be encoded as a vector (block vector) corresponding to the predetermined distance. IBC basically performs prediction in the current picture, but may be performed similarly to inter prediction in that a reference block is derived within the current picture. That is, IBC may use at least one of the inter prediction techniques described in the present disclosure.

The prediction signal generated by the prediction unit may be used to generate a reconstructed signal or to generate a residual signal. The subtractor 115 may generate a residual signal (residual block or residual sample array) by subtracting the prediction signal (predicted block or prediction sample array) output from the prediction unit from the input image signal (original block or original sample array). The generated residual signal may be transmitted to the transformer 120.

The transformer 120 may generate transform coefficients by applying a transform technique to the residual signal. For example, the transform technique may include at least one of a discrete cosine transform (DCT), a discrete sine transform (DST), a karhunen-loéve transform (KLT), a graph-based transform (GBT), or a conditionally non-linear transform (CNT). Here, the GBT means transform obtained from a graph when relationship information between pixels is represented by the graph. The CNT refers to transform acquired based on a prediction signal generated using all previously reconstructed pixels. In addition, the transform process may be applied to square pixel blocks having the same size or may be applied to blocks having a variable size rather than square.

The quantizer 130 may quantize the transform coefficients and transmit them to the entropy encoder 190. The entropy encoder 190 may encode the quantized signal (information on the quantized transform coefficients) and output a bitstream. The information on the quantized transform coefficients may be referred to as residual information. The quantizer 130 may rearrange quantized transform coefficients in a block type into a one-dimensional vector form based on a coefficient scanning order and generate information on the quantized transform coefficients based on the quantized transform coefficients in the one-dimensional vector form.

The entropy encoder 190 may perform various encoding methods such as, for example, exponential Golomb, context-adaptive variable length coding (CAVLC), context-adaptive binary arithmetic coding (CABAC), and the like. The entropy encoder 190 may encode information necessary for video/image reconstruction other than quantized transform coefficients (e.g., values of syntax elements, etc.) together or separately. Encoded information (e.g., encoded video/image information) may be transmitted or stored in units of network abstraction layers (NALs) in the form of a bitstream. The video/image information may further include information on various parameter sets such as an adaptation parameter set (APS), a picture parameter set (PPS), a sequence parameter set (SPS), or a video parameter set (VPS). In addition, the video/image information may further include general constraint information. The signaled information, transmitted information and/or syntax elements described in the present disclosure may be encoded through the above-described encoding procedure and included in the bitstream.

The bitstream may be transmitted over a network or may be stored in a digital storage medium. The network may include a broadcasting network and/or a communication network, and the digital storage medium may include various storage media such as USB, SD, CD, DVD, Blu-ray, HDD, SSD, and the like. A transmitter (not shown) transmitting a signal output from the entropy encoder 190 and/or a storage unit (not shown) storing the signal may be included as internal/external element of the image encoding apparatus 100. Alternatively, the transmitter may be provided as the component of the entropy encoder 190.

The quantized transform coefficients output from the quantizer 130 may be used to generate a residual signal. For example, the residual signal (residual block or residual samples) may be reconstructed by applying dequantization and inverse transform to the quantized transform coefficients through the dequantizer 140 and the inverse transformer 150.

The adder 155 adds the reconstructed residual signal to the prediction signal output from the inter prediction unit 180 or the intra prediction unit 185 to generate a reconstructed signal (reconstructed picture, reconstructed block, reconstructed sample array). If there is no residual for the block to be processed, such as a case where the skip mode is applied, the predicted block may be used as the reconstructed block. The adder 155 may be called a reconstructor or a reconstructed block generator. The generated reconstructed signal may be used for intra prediction of a next block to be processed in the current picture and may be used for inter prediction of a next picture through filtering as described below.

The filter 160 may improve subjective/objective image quality by applying filtering to the reconstructed signal. For example, the filter 160 may generate a modified reconstructed picture by applying various filtering methods to the reconstructed picture and store the modified reconstructed picture in the memory 170, specifically, a DPB of the memory 170. The various filtering methods may include, for example, deblocking filtering, a sample adaptive offset, an adaptive loop filter, a bilateral filter, and the like. The filter 160 may generate various information related to filtering and transmit the generated information to the entropy encoder 190 as described later in the description of each filtering method. The information related to filtering may be encoded by the entropy encoder 190 and output in the form of a bitstream.

The modified reconstructed picture transmitted to the memory 170 may be used as the reference picture in the inter prediction unit 180. When inter prediction is applied through the image encoding apparatus 100, prediction mismatch between the image encoding apparatus 100 and the image decoding apparatus may be avoided and encoding efficiency may be improved.

The DPB of the memory 170 may store the modified reconstructed picture for use as a reference picture in the inter prediction unit 180. The memory 170 may store the motion information of the block from which the motion information in the current picture is derived (or encoded) and/or the motion information of the blocks in the picture that have already been reconstructed. The stored motion information may be transmitted to the inter prediction unit 180 and used as the motion information of the spatial neighboring block or the motion information of the temporal neighboring block. The memory 170 may store reconstructed samples of reconstructed blocks in the current picture and may transfer the reconstructed samples to the intra prediction unit 185.

## Overview of image decoding apparatus

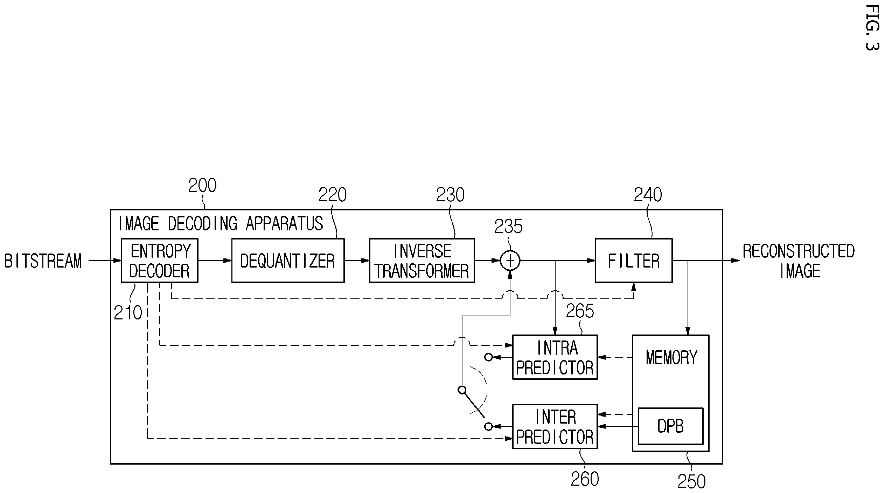

FIG. 3 is a view schematically showing an image decoding apparatus, to which an embodiment of the present disclosure is applicable.

As shown in FIG. 3, the image decoding apparatus 200 may include an entropy decoder 210, a dequantizer 220, an inverse transformer 230, an adder 235, a filter 240, a memory 250, an inter predictor 260 and an intra prediction unit 265. The inter predictor(inter prediction unit) 260 and the intra predictor(intra prediction unit) 265 may be collectively referred to as a "prediction unit(predictor)". The dequantizer 220 and the inverse transformer 230 may be included in a residual processor.

All or at least some of a plurality of components configuring the image decoding apparatus 200 may be configured by a hardware component (e.g., a decoder or a processor) according to an embodiment. In addition, the memory 170 may include a decoded picture buffer (DPB) or may be configured by a digital storage medium.

The image decoding apparatus 200, which has received a bitstream including video/image information, may reconstruct an image by performing a process corresponding to a process performed by the image encoding apparatus 100 of FIG. 2. For example, the image decoding apparatus 200 may perform decoding using a processing unit applied in the image encoding apparatus. Thus, the processing unit of decoding may be a coding unit, for example. The coding unit may be acquired by partitioning a coding tree unit or a largest coding unit. The reconstructed image signal decoded and output through the image decoding apparatus 200 may be reproduced through a reproducing apparatus (not shown).

The image decoding apparatus 200 may receive a signal output from the image encoding apparatus of FIG. 2 in the form of a bitstream. The received signal may be decoded through the entropy decoder 210. For example, the entropy decoder 210 may parse the bitstream to derive information (e.g., video/image information) necessary for image reconstruction (or picture reconstruction). The video/image information may further include information on various parameter sets such as an adaptation parameter set (APS), a picture parameter set (PPS), a sequence parameter set (SPS), or a video parameter set (VPS). In addition, the video/image information may further include general constraint information. The image decoding apparatus may further decode picture based on the information on the parameter set and/or the general constraint information. Signaled/received information and/or syntax elements described in the present disclosure may be decoded through the decoding procedure and obtained from the bitstream. For example, the entropy decoder 210 decodes the information in the bitstream based on a coding method such as exponential Golomb coding, CAVLC, or CABAC, and output values of syntax elements required for image reconstruction and quantized values of transform coefficients for residual. More specifically, the CABAC entropy decoding method may receive a bin corresponding to each syntax element in the bitstream, determine a context model using a decoding target syntax element information, decoding information of a neighboring block and a decoding target block or information of a symbol/bin decoded in a previous stage, and perform arithmetic decoding on the bin by predicting a probability of occurrence of a bin according to the determined context model, and generate a symbol corresponding to the value of each syntax element. In this case, the CABAC entropy decoding method may update the context model by using the information of the decoded symbol/bin for a context model of a next symbol/bin after determining the context model. The information related to the prediction among the information decoded by the entropy decoder 210 may be provided to the prediction unit (the inter predictor 260 and the intra prediction unit 265), and the residual value on which the entropy decoding was performed in the entropy decoder 210, that is, the quantized transform coefficients and related parameter information, may be input to the dequantizer 220. In addition, information on filtering among information decoded by the entropy decoder 210 may be provided to the filter 240. Meanwhile, a receiver (not shown) for receiving a signal output from the image encoding apparatus may be further configured as an internal/external element of the image decoding apparatus 200, or the receiver may be a component of the entropy decoder 210.

Meanwhile, the image decoding apparatus according to the present disclosure may be referred to as a video/image/picture decoding apparatus. The image decoding apparatus may be classified into an information decoder (video/image/picture information decoder) and a sample decoder (video/image/picture sample decoder). The information decoder may include the entropy decoder 210. The sample decoder may include at least one of the dequantizer 220, the inverse transformer 230, the adder 235, the filter 240, the memory 250, the inter prediction unit 160 or the intra prediction unit 265.

The dequantizer 220 may dequantize the quantized transform coefficients and output the transform coefficients. The dequantizer 220 may rearrange the quantized transform coefficients in the form of a two-dimensional block. In this case, the rearrangement may be performed based on the coefficient scanning order performed in the image encoding apparatus. The dequantizer 220 may perform dequantization on the quantized transform coefficients by using a quantization parameter (e.g., quantization step size information) and obtain transform coefficients.

The inverse transformer 230 may inversely transform the transform coefficients to obtain a residual signal (residual block, residual sample array).

The prediction unit may perform prediction on the current block and generate a predicted block including prediction samples for the current block. The prediction unit may determine whether intra prediction or inter prediction is applied to the current block based on the information on the prediction output from the entropy decoder 210 and may determine a specific intra/inter prediction mode (prediction technique).

It is the same as described in the prediction unit of the image encoding apparatus 100 that the prediction unit may generate the prediction signal based on various prediction methods (techniques) which will be described later.

The intra predictor 265 may predict the current block by referring to the samples in the current picture. The description of the intra prediction unit 185 is equally applied to the intra prediction unit 265.

The inter predictor 260 may derive a predicted block for the current block based on a reference block (reference sample array) specified by a motion vector on a reference picture. In this case, in order to reduce the amount of motion information transmitted in the inter prediction mode, motion information may be predicted in units of blocks, subblocks, or samples based on correlation of motion information between the neighboring block and the current block. The motion information may include a motion vector and a reference picture index. The motion information may further include inter prediction direction (L0 prediction, L1 prediction, Bi prediction, etc.) information. In the case of inter prediction, the neighboring block may include a spatial neighboring block present in the current picture and a temporal neighboring block present in the reference picture. For example, the inter predictor 260 may configure a motion information candidate list based on neighboring blocks and derive a motion vector of the current block and/or a reference picture index based on the received candidate selection information. Inter prediction may be performed based on various prediction modes, and the information on the prediction may include information indicating a mode of inter prediction for the current block.

The adder 235 may generate a reconstructed signal (reconstructed picture, reconstructed block, reconstructed sample array) by adding the obtained residual signal to the prediction signal (predicted block, predicted sample array) output from the prediction unit (including the inter predictor 260 and/or the intra prediction unit 265). If there is no residual for the block to be processed, such as when the skip mode is applied, the predicted block may be used as the reconstructed block. The description of the adder 155 is equally applicable to the adder 235. The adder 235 may be called a reconstructor or a reconstructed block generator. The generated reconstructed signal may be used for intra prediction of a next block to be processed in the current picture and may be used for inter prediction of a next picture through filtering as described below.

The filter 240 may improve subjective/objective image quality by applying filtering to the reconstructed signal. For example, the filter 240 may generate a modified reconstructed picture by applying various filtering methods to the reconstructed picture and store the modified reconstructed picture in the memory 250, specifically, a DPB of the memory 250. The various filtering methods may include, for example, deblocking filtering, a sample adaptive offset, an adaptive loop filter, a bilateral filter, and the like.

The (modified) reconstructed picture stored in the DPB of the memory 250 may be used as a reference picture in the inter predictor 260. The memory 250 may store the motion information of the block from which the motion information in the current picture is derived (or decoded) and/or the motion information of the blocks in the picture that have already been reconstructed. The stored motion information may be transmitted to the inter predictor 260 so as to be utilized as the motion information of the spatial neighboring block or the motion information of the temporal neighboring block. The memory 250 may store reconstructed samples of reconstructed blocks in the current picture and transfer the reconstructed samples to the intra prediction unit 265.

In the present disclosure, the embodiments described in the filter 160, the inter prediction unit 180, and the intra prediction unit 185 of the image encoding apparatus 100 may be equally or correspondingly applied to the filter 240, the inter predictor 260, and the intra predictor 265 of the image decoding apparatus 200.

## Inter prediction

The prediction unit of the image encoding apparatus 100 and the image decoding apparatus 200 may derive a prediction sample by performing inter prediction on a per-block basis. Inter prediction can be a prediction derived in a manner that is dependent on data elements (e.g., sample values or motion information) of picture(s) other than the current picture. When inter prediction is applied to a current block, a predicted block (a prediction sample array) for the current block may be derived on the basis of a reference block (a reference sample array) specified by a motion vector on a reference picture indicated by a reference picture index. Herein, in order to reduce the amount of motion information transmitted in the inter prediction mode, the motion information of the current block may be predicted on a per block, subblock, or sample basis on the basis of the correlation of motion information between a neighboring block and the current block. The motion information may include a motion vector and a reference picture index. The motion information may further include inter prediction type (L0 prediction, L1 prediction, Bi prediction, etc.) information. When inter prediction is applied, neighboring blocks may include a spatial neighboring block present in the current picture and a temporal neighboring block present in the reference picture. The reference picture including the reference block and the reference picture including the temporal neighboring block may be the same or different. The temporal neighboring block may be called a collocated reference block or a collocated CU (colCU). The reference picture including the temporal neighboring block may be called a collocated picture (colPic). For example, a motion information candidate list may be constructed on the basis of neighboring blocks of the current block. A flag or index information indicating which candidate is selected (used) to derive a motion vector and/or a reference picture index of the current block may be signaled. Inter prediction may be performed on the basis of various prediction modes. For example, in the case of a skip mode and a merge mode, motion information of a current block may be the same as motion information of a selected neighboring block. In the case of the skip mode, unlike the merge mode, the residual signal may not be transmitted. In the case of a motion information prediction (motion vector prediction, MVP) mode, a motion vector of a selected neighboring block may be used as a motion vector predictor, and a motion vector difference may be signaled. In this case, a motion vector of the current block may be derived using the sum of the motion vector predictor and the motion vector difference.

The motion information may include L0 motion information and/or L1 motion information according to an inter prediction type (L0 prediction, L1 prediction, Bi prediction, etc.). A motion vector in the L0 direction may be called an L0 motion vector or MVL0, and a motion vector in the L1 direction may be called an L1 motion vector or MVL1. The prediction based on the L0 motion vector may be called L0 prediction. The prediction based on the L1 motion vector may be called L1 prediction. The prediction based on both the L0 motion vector and the L1 motion vector may be called bi-prediction. Herein, the L0 motion vector may refer to a motion vector associated with a reference picture list L0 (L0), and the L1 motion vector may refer to a motion vector associated with a reference picture list L1 (L1). The reference picture list L0 may include, as reference pictures, pictures preceding the current picture in terms of output order. The reference picture list L1 may include pictures following the current picture in terms of output order. The preceding pictures may be called forward (reference) pictures, and the following pictures may be called backward (reference) pictures. The reference picture list L0 may further include, as reference pictures, pictures following the current picture in terms of output order. In this case, within the reference picture list L0, the preceding pictures may be indexed first, and the following pictures may be indexed next. The reference picture list L1 may further include, as reference pictures, pictures preceding the current picture in terms of output order. In this case, within the reference picture list1, the following pictures may be indexed first, and the preceding pictures may be indexed next. Herein, the output order may correspond to the picture order count (POC) order.

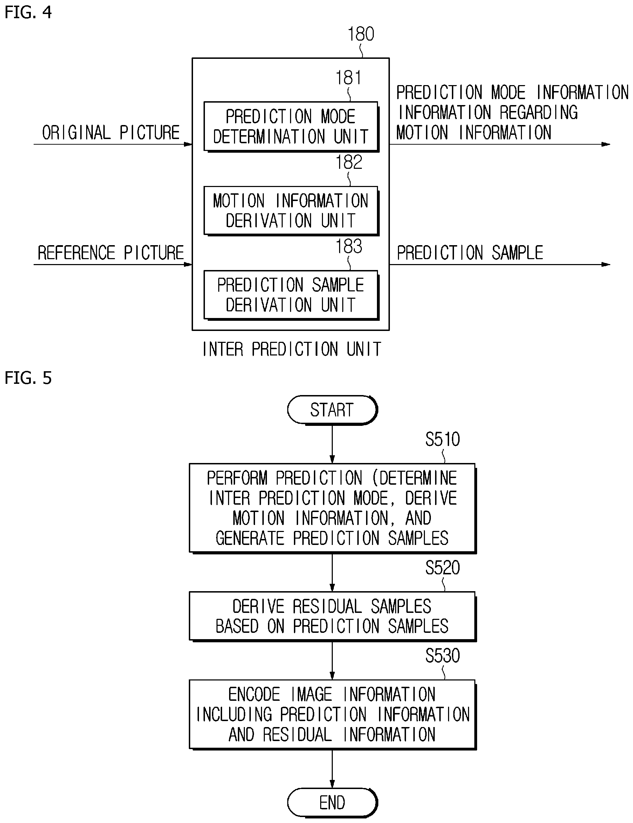

FIG. 4 is a diagram schematically showing the inter prediction unit 180 of the image encoding apparatus 100, and FIG. 5 is a flowchart showing a method of encoding an image based on inter prediction.

The image encoding apparatus 100 may perform inter prediction on a current block (S510). The image encoding apparatus 100 may derive an inter prediction mode and motion information of the current block, and may generate prediction samples of the current block. Herein, the procedures of determination of the inter prediction mode, derivation of the motion information, and generation of the prediction samples may be performed simultaneously, or any one procedure may be performed before the other procedures. For example, the inter prediction unit 180 of the image encoding apparatus 100 may include a prediction mode determination unit 181, a motion information derivation unit 182, and a prediction sample derivation unit 183. The prediction mode determination unit 181 may determine the prediction mode for the current block. The motion information derivation unit 182 may derive the motion information of the current block. The prediction sample derivation unit 183 may derive the prediction samples of the current block. For example, the inter prediction unit 180 of the image encoding apparatus 100 may search a predetermined area (search area) of reference pictures for a block similar to the current block through motion estimation, and may derive a reference block of which the difference from the current block is a minimum or less than or equal to a predetermined standard. On the basis of this, a reference picture index indicating the reference picture in which the reference block is located may be derived, and a motion vector may be derived on the basis of the location difference between the reference block and the current block. The image encoding apparatus 100 may determine a mode applied to the current block among various prediction modes. The image encoding apparatus 100 may compare RD costs for the various prediction modes and may determine the optimum prediction mode for the current block.

For example, when the skip mode or the merge mode is applied to the current block, the image encoding apparatus 100 may construct a merge candidate list described later, and may derive a reference block of which the difference from the current block is a minimum or less than or equal to a predetermined standard, among reference blocks indicated by merge candidates included in the merge candidate list. In this case, the merge candidate associated with the derived reference block may be selected, and merge index information indicating the selected merge candidate may be generated and signaled to the decoding apparatus. The motion information of the current block may be derived using the motion information of the selected merge candidate.

As another example, when the (A)MVP mode is applied to the current block, the image encoding apparatus 100 may construct an (A)MVP candidate list described later, and may use, as a motion vector predictor (mvp) of the current block, a motion vector of an mvp candidate selected among mvp candidates included in the (A)MVP candidate list. In this case, for example, a motion vector indicating a reference block derived by the above-described motion estimation may be used as a motion vector of the current block. Among the mvp candidates, an mvp candidate having the motion vector having the minimum difference from the motion vector of the current block may be the selected mvp candidate. A motion vector difference (MVD) that is a difference resulting from subtracting the mvp from the motion vector of the current block may be derived. In this case, information on the MVD may be signaled to the image decoding apparatus 200. In addition, when the (A)MVP mode is applied, a value of the reference picture index may be constructed as reference picture index information and may be separately signaled to the image decoding apparatus 200.

The image encoding apparatus 100 may derive residual samples on the basis of the prediction samples (S520). The image encoding apparatus 100 may compare the prediction samples with the original samples of the current block to derive the residual samples.

The image encoding apparatus 100 may encode image information including prediction information and residual information (S530). The image encoding apparatus 100 may output the encoded image information in the form of a bitstream. The prediction information is pieces of information related to the prediction procedure, and may include prediction mode information (e.g., a skip flag, a merge flag, or a mode index) and information on motion information. The information on the motion information may include candidate selection information (e.g., a merge index, an mvp flag, or an mvp index) that is information for deriving a motion vector. In addition, the information on the motion information may include the information on the MVD and/or the reference picture index information described above. In addition, the information on the motion information may include information indicating whether L0 prediction, L1 prediction, or bi-prediction is applied. The residual information is information on the residual samples. The residual information may include information on quantized transform coefficients for the residual samples.

The output bitstream may be stored in a (digital) storage medium and transmitted to the decoding apparatus, or may be transmitted to the image decoding apparatus 200 over a network.

In the meantime, as described above, the image encoding apparatus 100 may generate a reconstructed picture (including reconstructed samples and a reconstructed block) on the basis of the reference samples and the residual samples. This is to derive the same prediction result by the image encoding apparatus 100 as that performed in the image decoding apparatus 200, and through this, coding efficiency may be increased. Accordingly, the image encoding apparatus 100 may store a reconstructed picture (or reconstructed samples, a reconstructed block) in a memory, and may use the same as a reference picture for inter prediction. As described above, an in-loop filtering procedure may be further applied to the reconstructed picture.

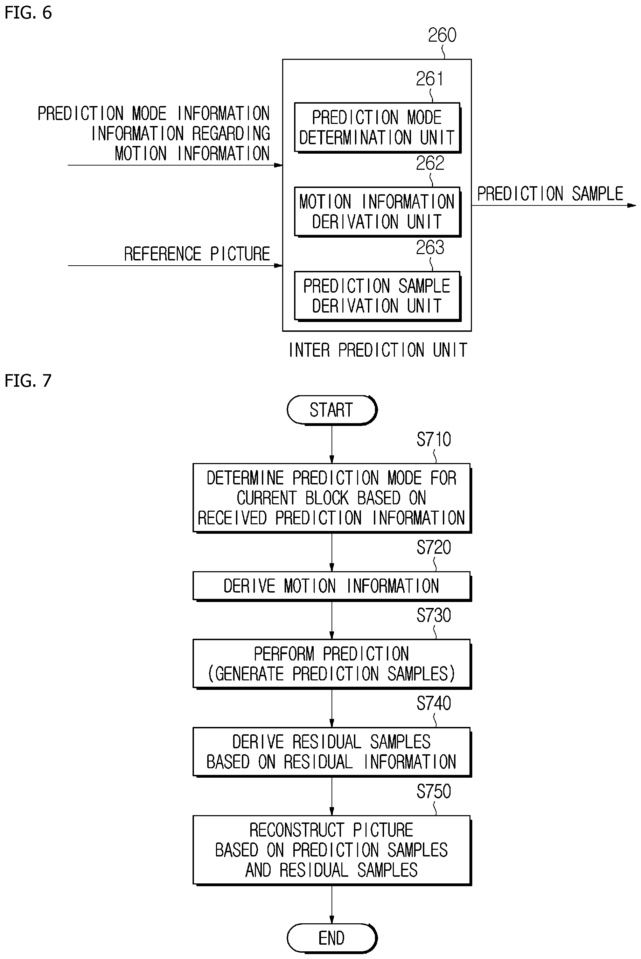

FIG. 6 is a diagram schematically showing the inter prediction unit 260 of the image decoding apparatus 200, and FIG. 7 is a flowchart showing a method of decoding an image based on inter prediction.

The image decoding apparatus 200 may perform the operation corresponding to the operation performed by the image encoding apparatus 100. The image decoding apparatus 200 may perform prediction on the current block on the basis of the received prediction information and may derive prediction samples.

Specifically, the image decoding apparatus 200 may determine a prediction mode for the current block on the basis of the received prediction information (S710). The image decoding apparatus 200 may determine which inter prediction mode is applied to the current block on the basis of the prediction mode information in the prediction information.

For example, on the basis of the merge flag, it may be determined whether the merge mode is applied to the current block or the (A)MVP mode is determined. Alternatively, one of various inter prediction mode candidates may be selected on the basis of the mode index. The inter prediction mode candidates may include a skip mode, a merge mode, and/or an (A)MVP mode, or may include various inter prediction modes described later.

The image decoding apparatus 200 may derive motion information of the current block on the basis of the determined inter prediction mode (S720). For example, when the skip mode or the merge mode is applied to the current block, the image decoding apparatus 200 may construct a merge candidate list described later, and may select one merge candidate among merge candidates included in the merge candidate list. The selection may be performed on the basis of the above-described selection information (a merge index). The motion information of the current block may be derived using the motion information of the selected merge candidate. The motion information of the selected merge candidate may be used as the motion information of the current block.

As another example, when the (A)MVP mode is applied to the current block, the image decoding apparatus 200 may construct an (A)MVP candidate list described later, and may use, as a motion vector predictor (mvp) of the current block, a motion vector of an mvp candidate selected among mvp candidates included in the (A)MVP candidate list. The selection may be performed on the basis of the above-described selection information (an mvp flag or an mvp index). In this case, the MVD of the current block may be derived on the basis of the information on the MVD, and the motion vector of the current block may be derived on the basis of the mvp of the current block and the MVD. In addition, a reference picture index of the current block may be derived on the basis of the reference picture index information. A picture indicated by the reference picture index in the reference picture list related to the current block may be derived as a reference picture that is referenced for inter prediction of the current block.

In the meantime, as will be described later, the motion information of the current block may be derived without constructing a candidate list. In this case, the motion information of the current block may be derived according to a procedure described in a prediction mode described later. In this case, the candidate list configuration as described above may be omitted.

The image decoding apparatus 200 may generate prediction samples for the current block on the basis of the motion information of the current block (S730). In this case, the reference picture may be derived on the basis of the reference picture index of the current block, and the prediction samples of the current block may be derived using samples of a reference block indicated on the reference picture by the motion vector of the current block. In this case, as described later, in some cases, a prediction sample filtering procedure may be further performed on all or some of the prediction samples of the current block.

For example, the inter prediction unit 260 of the image decoding apparatus 200 may include a prediction mode determination unit 261, a motion information derivation unit 262, and a prediction sample derivation unit 263. The prediction mode determination unit 181 may determine the prediction mode for the current block on the basis of received prediction mode information. The motion information derivation unit 182 may derive the motion information (a motion vector and/or a reference picture index) of the current block on the basis of received information on the motion information. The prediction sample derivation unit 183 may derive the prediction samples of the current block.

The image decoding apparatus 200 may generate residual samples for the current block on the basis of the received residual information (S740). The image decoding apparatus 200 may generate reconstructed samples for the current block on the basis of the prediction samples and the residual samples, and may generate, on the basis of this, a reconstructed picture (S750). Afterward, as described above, an in-loop filtering procedure may be further applied to the reconstructed picture.

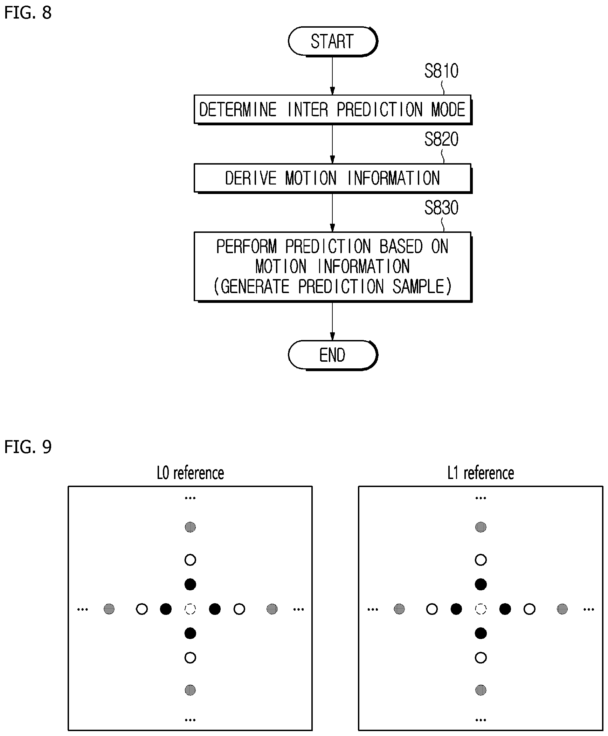

Referring to FIG. 8, the inter prediction procedure may include the steps of determining an inter prediction mode (S810), deriving motion information according to the determined prediction mode (S820), and performing prediction based on the derived motion information (generating a prediction sample)(S830). The inter prediction procedure may be performed in the image encoding apparatus 100 and the image decoding apparatus 200 as described above.

**Inter prediction mode determination**

Various inter prediction modes may be used for prediction of the current block in the picture. For example, various modes, such as a merge mode, a skip mode, a motion vector prediction (MVP) mode, an affine mode, a subblock merge mode, and a merge with MVD (MMVD) mode, and the like may be used. A decoder side motion vector refinement (DMVR) mode, an adaptive motion vector resolution (AMVR) mode, a bi-prediction with CU-level weight (BCW), a bi-directional optical flow (BDOF), and the like may also be used as additional modes additionally or instead. The affine mode may be called an affine motion prediction mode. The MVP mode may be referred to as advanced motion vector prediction (AMVP) mode. In this document, some modes and/or motion information candidates derived by some modes may be included as one of motion information candidates of other modes. For example, an HMVP candidate may be added as a merge candidate in the merge/skip mode or may be added as an mvp candidate in the MVP mode.

Prediction mode information indicating the inter prediction mode of the current block may be signaled from the image encoding apparatus 100 to the image decoding apparatus 200. The prediction mode information may be included in the bitstream and received by the image decoding apparatus 200. The prediction mode information may include index information indicating one of a plurality of candidate modes. Alternatively, the inter prediction mode may be indicated through hierarchical signaling of flag information. In this case, the prediction mode information may include one or more flags. For example, a skip flag may be signaled to indicate whether a skip mode is applied, and if the skip mode is not applied, a merge flag may be signaled to indicate whether a merge mode is applied, and if the merge mode is not applied, it is indicated to apply an MVP mode or a flag for additional classification may be further signaled. The affine mode may be signaled in an independent mode or may be signaled in a mode dependent on the merge mode or the MVP mode. For example, the affine mode may include an affine merge mode and an affine MVP mode.

**Derivation of motion information**

Inter prediction may be performed using motion information of the current block. The image encoding apparatus 100 may derive optimal motion information for the current block through a motion estimation procedure. For example, the image encoding apparatus 100 may search for a similar reference block having a high correlation in units of fractional pixels within a predetermined search range in the reference picture using the original block in the original picture for the current block, thereby deriving motion information. Similarity of blocks may be derived based on a difference of phase based sample values. For example, the similarity of the blocks may be calculated based on the SAD between the current block (or template of the current block) and the reference block (or template of the reference block). In this case, motion information may be derived based on a reference block having the smallest SAD in the search area. The derived motion information may be signaled to the image decoding apparatus 200 according to various methods based on the inter prediction mode.

**Generation of prediction sample**

A predicted block for the current block may be derived based on motion information derived according to the prediction mode. The predicted block may include prediction samples (prediction sample array) of the current block. When the motion vector of the current block indicates a fractional sample unit, an interpolation procedure may be performed, through which prediction samples of the current block may be derived based on reference samples in the fractional sample unit within a reference picture. When affine inter prediction is applied to the current block, prediction samples may be generated based on a sample/subblock unit MV. When bi-prediction is applied, prediction samples derived through weighting or weighted averaging (according to phase) of prediction samples derived based on L0 prediction (that is, prediction using reference picture and MVL0 in reference picture list L0) and prediction samples derived based on L1 prediction (that is, prediction using reference picture and MVL1 in reference picture list L1) may be used as prediction samples of the current block. When bi-prediction is applied, if the reference picture used for L0 prediction and the reference picture used for L1 prediction are located in different temporal directions with respect to the current picture (i.e., bi-prediction and bidirectional prediction), it may be called true bi-prediction.

As described above, reconstructed samples and reconstructed pictures may be generated based on the derived prediction samples, and thereafter, a procedure such as in-loop filtering may be performed.

### MMVD (merge mode with motion vector difference)

In addition to the merge mode, in which implicitly derived motion information is directly used to generate a prediction sample of a current block, an MMVD mode has been proposed. Since similar motion information derivation methods are used in a skip mode and a merge mode, the MMVD mode may also be applied to the skip mode. The mmvd flag (e.g., mmvd_flag) indicating whether the MMVD mode is applied to the current block may be signaled immediately after a skip flag and a merge flag are transmitted.

In the MMVD mode, after a merge candidate is selected, the selected merge candidate may be improved by signaled MVDs information. If the MMVD mode is applied to the current block (i.e., the value of mmvd_flag is equal to 1), additional information for the MMVD mode may be signaled. The additional information may include a merge candidate flag (e.g., mmvd_merge_flag), which indicates whether a first (0) or second (1) merge candidate in a merge candidate list is used with MVD, and an index (e.g., mmvd_distance_idx), which indicates the magnitude of the movement, and an index indicating a direction of movement (e.g., mmvd_direction_idx). In the MMVD mode, either one of the first two candidates in the merge candidate list may be selected and used as a basic MV (MV basis). The merge candidate flag may be signaled to indicate which of the first two candidates will be used.

A distance index (e.g., mmvd_distance_idx) represents movement magnitude information and may represent a predetermined offset from a starting point. As shown in FIG. 9, the offset may be added to a horizontal component or a vertical component of the starting MV (starting point). The relationship between the distance index and the predetermined offset may be expressed as Table 1.

[Table 1]

| mmvd_distance_idx[x0][ y0] | MmvdDistance[x0][y0] | |
|---|---|---|
| | slice_fpel_mmvd_enabled_ flag == 0 | slice_fpel_mmvd_enabled_ flag == 1 |
| 0 | 1 | 4 |
| 1 | 2 | 8 |
| 2 | 4 | 16 |
| 3 | 8 | 32 |
| 4 | 16 | 64 |
| 5 | 32 | 128 |
| 6 | 64 | 256 |
| 7 | 128 | 512 |

In Table 1, a value 1 of slice_fpel_mmvd_enabled_flag may indicate that the MMVD mode uses integer sample accuracy in a current slice. A value 0 of slice_fpel_mmvd_enabled_flag may indicate that the MMVD mode uses fractional sample accuracy in the current slice. If slice_fpel_mmvd_enabled_flag is not present, the value of slice_fpel_mmvd_enabled_flag may be inferred to be 0. The slice_fpel_mmvd_enabled_flag syntax element may be signaled through a slice header (or included in the slice header).

The direction index (e.g., mmvd_direction_idx) may indicate the MVD direction based on the starting point. The direction index may represent four directions as expressed in Table 2.

[Table 2]

| mmvd_direction_idx[x0][y0] | MmvdSign[x0][y0][0] | MmvdSign[x0][y0][1] |
|---|---|---|
| 0 | +1 | 0 |
| 1 | -1 | 0 |
| 2 | 0 | +1 |
| 3 | 0 | -1 |

In Table 2, the meaning of the MVD sign (MmvdSign) may vary depending on the information of the starting MVs. If the starting MVs are uni-prediction MVs (uni-prediction MVs) or bi-prediction MVs (bi-prediction MVs) in which two prediction lists indicate the same direction of a current picture (i.e., the POCs of reference pictures are greater than the POC of the current picture or the POCs of the reference pictures are smaller than the POC of the current picture), the MVD sign in Table 2 may indicate the sign of the MV offset added to the starting MV. In the case of bi-prediction MVs in which two prediction lists indicate different directions of the current picture (i.e., if the POC of one reference picture is larger than the POC of the current picture and the POC of the other reference picture is smaller than the POC of the current picture), the MVD sign in Table 2 may represent the sign of the MV offset added to the list 0 MV component of the starting MV, and the MVD sign for the list 1 MV may have the opposite value.

The two components of MmvdOffset[x0][y0] may be derived as in Equation 1.

[Equation 1]
$$MmvdOffset[x0][y0][0] = (MmvdDistance[x0][y0] \ll 2) * MmvdSign[x0][y0][0]$$
$$MmvdOffset[x0][y0][1] = (MmvdDistance[x0][y0] \ll 2) * MmvdSign[x0][y0][1]$$

**Affine prediction**

Existing video coding systems use only one MV (using translation MV) to express the motion of a coding block. However, although the above method may have expressed optimal motion on a block basis, this is not the actual optimal motion of each pixel. Therefore, if the optimal MV may be determined on a pixel basis, coding efficiency can be increased. To this end, in the present embodiment, an affine motion prediction method of performing encoding using an affine motion model will be described. The affine motion prediction method may express MV in each pixel unit of a block using 2, 3, or 4 MVs.

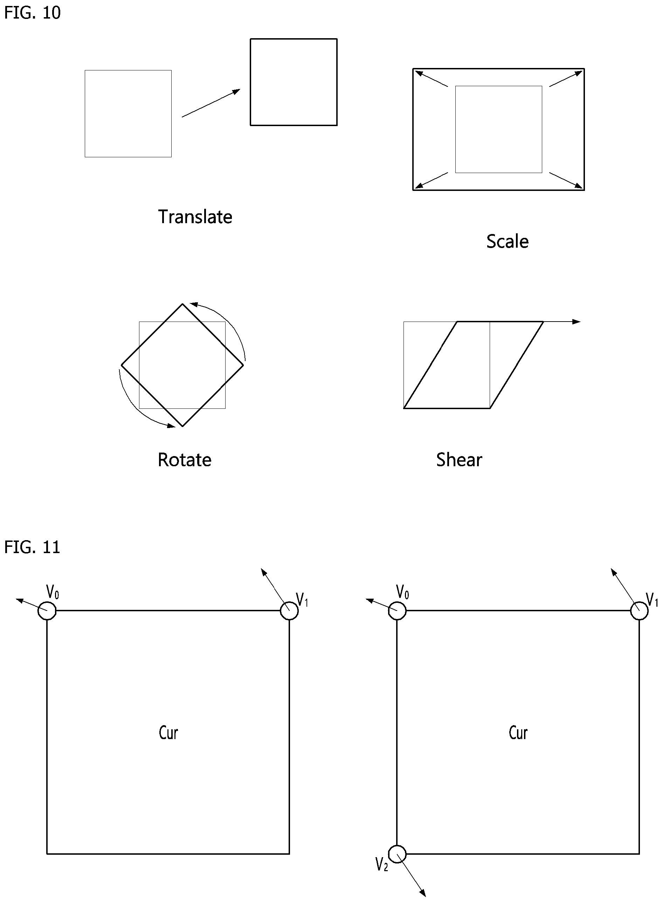

The affine motion model may express four types of motions as shown in FIG. 10. Among the motions that may be expressed by an affine motion model, an affine motion model that expresses three types of motions (translation, scale, and rotate) is called a similarity (or simplified) affine motion model, and herein proposed methods will be explained based on the similarity (or simplified) affine motion model. However, the proposed methods are not limited to the corresponding affine motion model.

As shown in FIG. 11, the affine motion model may determine the MV of the pixel position included in a block using two or more control point MV (CPMV)s. At this time, the set of MVs is called an affine motion vector field (MVF), and the MVF may be determined by Equations 2 and 3 below.

For the 4-parameter affine motion model, the MV of the sample position (x, y) within the block may be derived by Equation 2.

[Equation 2]
$$\begin{cases} mv_x = \dfrac{mv_{1x}-mv_{0x}}{W}x + \dfrac{mv_{1y}-mv_{0y}}{W}y + mv_{0x} \\ mv_y = \dfrac{mv_{1y}-mv_{0y}}{W}x + \dfrac{mv_{1x}-mv_{0x}}{W}y + mv_{0y} \end{cases}$$

For the 6-parameter affine motion model, the MV of the sample position (x, y) within the block may be derived by Equation 3.

[Equation 3]

$$\begin{cases} mv_x = \frac{mv_{1x}-mv_{0x}}{W}x + \frac{mv_{2x}-mv_{0x}}{H}y + mv_{0x} \\ mv_y = \frac{mv_{1y}-mv_{0y}}{W}x + \frac{mv_{2y}-mv_{0y}}{H}y + mv_{0y} \end{cases}$$

In FIG. 11, Equation 2 and Equation 3, $\vec{v_0} = \{v_{0x}, v_{0y}\}$ may be the CPMV of the CP at the top-left corner position of the coding block, $\vec{v_1} = \{v_{1x}, v_{1y}\}$ may be the CPMV of the CP at the top-right corner position, $\vec{v_2} = \{v_{2x}, v_{2y}\}$ may be the CPMV of the CP at the bottom-left corner position. In addition, W corresponds to the width of the current block, H corresponds to the height of the current block, and $\vec{v} = \{v_x, v_y\}$ may correspond to the MV at the {x, y} position.

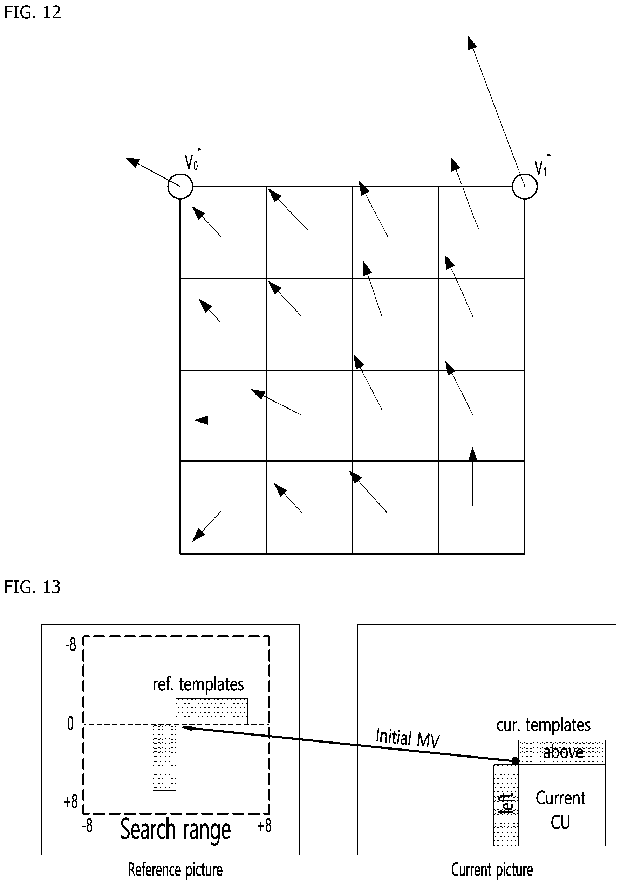

During the encoding/decoding process, the affine MVF may be determined on a pixel basis or an already defined sub-block basis. When being determined on a pixel basis, the MV is obtained based on each pixel value, and when being determined on a sub-block basis, the MV of the block may be obtained based on the center pixel value of the sub-block (lower-right side of the center, i.e., lower-right sample among the four center samples). Herein, the description is made assuming that the affine MVF is determined in units of 4x4 subblocks, as shown in FIG. 12. However, since this is only for convenience of explanation, the size of the subblock on which the affine MVF is determined may vary in various ways.

If affine prediction is available, motion models applicable to the current block may include the following three models: translational motion model, 4-parameter affine motion model, and 6-parameter affine motion model. Here, the translational motion model may represent a model in which existing block unit motion vectors are used, the 4-parameter affine motion model may represent a model in which two CPMVs are used, and the 6-parameter affine motion model may represent a model in which three CPMVs are used.

Affine motion prediction may include an affine MVP (or affine inter) mode and an affine merge mode. In affine motion prediction, MVs of the current block may be derived on a sub-block basis or a sample basis.

## Template matching (TM)

Template Matching (TM) is a motion vector derivation method performed at a decoder stage, and is a method of refining motion information of a current block by finding a template (hereinafter referred to as "reference template") in a reference picture which is most similar to a template (hereinafter referred to as "current template") adjacent to the current block (e.g., current coding unit, current CU). The current template may be a top neighboring block and/or a left neighboring block of the current block, or may be some of these neighboring blocks. Additionally, the reference template may be determined to have the same size as the current template.

As shown in FIG. 13, when an initial motion vector of the current block is derived, a search for a better motion vector may be performed in the surrounding area of the initial motion vector. For example, the range of the surrounding area where the search is performed may be within the [-8, +8]-pel search area centered on the initial motion vector. Additionally, the size of the search step for performing the search may be determined based on the AMVR mode of the current block. Additionally, template matching may be performed continuously with a bilateral matching process in the merge mode.

## Adaptive reordering of merge candidates with template matching (ARMC-TM)

Merge candidates may be adaptively reordered through template matching. The reordering method may be applied to a regular merge mode, a template matching (TM) merge mode, and an affine merge mode (except for SbTMVP candidate). In the case of the TM merge mode, the reordering of the merge candidates may be performed before the above-described motion vector refinement process.

After a merge candidate list is constructed, merge candidates may be divided into one or more subgroups. The size of the subgroup for the regular merge mode and the TM merge mode may be 5. In addition, the size of the subgroup for the affine merge mode may be 3. The merge candidates in each subgroup may be reordered in ascending order according to cost values based on template matching. For simplicity, the merge candidates in the last subgroup, not the first subgroup, may not be reordered.

The template matching cost of a merge candidate may be measured by the sum of absolute differences (SAD) between samples of a template of a current block and reference samples corresponding thereto. At this time, the template may include a set of reconstructed samples neighboring the current block. The reference samples of the template may be located by motion information of the merge candidate.

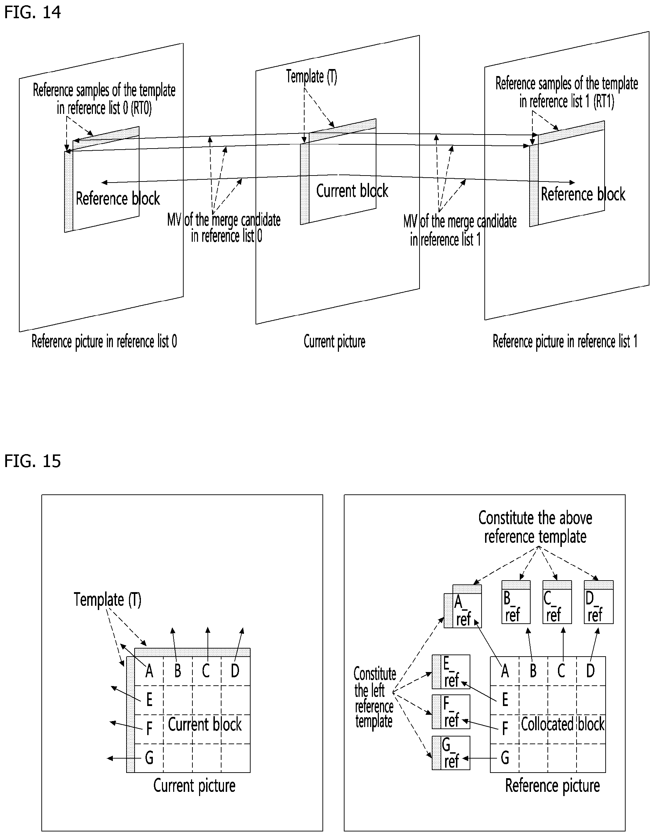

FIG. 14 is a diagram exemplarily illustrating a template of a current block and reference samples of templates in reference pictures. When a merge candidate uses bi-prediction, reference samples of the template of the merge candidate may be generated as illustrated in FIG. 14. Specifically, after a reference block of a reference picture in list 0 is specified based on a list 0 (L0) motion vector of a merge candidate of a current block, a reference template (reference template 0, RT0) of the reference picture in list 0 may be specified. Similarly, after a reference block of a reference picture in list 1 is specified based on a list 1 (L1) motion vector of a merge candidate of a current block, a reference template (reference template 1, RT1) of a reference picture in list 1 may be specified.

For a sub-block-based merge candidate where the size of a sub-block is Wsub × Hsub, an upper template may include one or more sub-templates with a size of Wsub × 1, and a left template may include one or more sub-templates with a size of 1 × Hsub.

FIG. 15 is a view for explaining a method of specifying a template using motion information of a sub-block.

In the example illustrated in FIG. 15, reference samples of each sub-template may be derived using motion information of sub-blocks included in a first column and first row of a current block. More specifically, reference sub-blocks (A_ref, B_ref, C_ref, D_ref, E_ref, F_ref, G_ref) corresponding to a reference picture may be specified using motion vectors of sub-blocks (A, B, C, D, E, F, G) included in the first column and first row of the current block in the current picture. For example, the location of the corresponding reference sub-block may be specified from a collocated block in the reference picture based on the motion vector of each sub-block. Thereafter, reference templates may be constituted from a reconstructed region adjacent to each reference sub-block. As illustrated in FIG. 15, when the size of a sub-block is Wsub × Hsub, an upper reference template may include one or more sub-reference templates with a size of Wsub × 1, and a left reference template may include one or more sub-reference templates with a size of 1 × Hsub.

### TMVP/NAMVP candidate reordering

Merge candidates of a single type (e.g., TMVP or NAMVP) may be reordered based on the ARMC TM cost value. Here, TMVP (temporal motion vector prediction) is a temporal prediction candidate for a current block, and NAMVP (non-adjacent) is a prediction candidate that is not adjacent to a current block. The reordered candidates may be added to a merge candidate list. The TMVP candidate type may add more TMVP candidates with more temporal positions and different inter prediction directions to perform reordering and selection. In addition, the NAMVP candidate type may be extended to more spatially non-adjacent positions.

### MMVD/ Affine MMVD candidate reordering

As additional refinement positions are added according to $k \times \pi/8$ diagonal angles, the number of directions may be increased from 4 to 16. Also, the number of distance positions for each direction may be reduced from 8 to 6. Based on the SAD cost between the template for each refinement position (one on the top of the current block, the other on the left of the current block) and the reference template, all 96 (16*6) MMVD refinement positions (that is, MMVD prediction candidates) may be reordered for each base candidate. The top 1/8 MMVD prediction candidates with the smallest template SAD cost may be maintained as available candidates for MMVD index coding. The MMVD index may be binarized into a rice code with a parameter of 2.

Extended affine MMVD reordering in which additional refinement positions are added according to the $k \times \pi/4$ diagonal angle has been added. After the affine MMVD prediction candidates are reordered, the top 1/2 affine MMVD prediction candidates with the smallest template SAD cost may be maintained.

### Reference Picture Resampling (RPR)

Depending on the video compression technology, adaptive resolution change (ARC) of Coded Layer Video Sequence (CLVS) may be supported. If ARC is allowed, a reference picture having a different resolution from a current picture may be resampled. The reference picture may be a picture included in the same layer as a current layer including the current picture. Resampling may be referred to as Reference Picture Resampling (RPR). For example, reference picture resampling may include a process of scaling and interpolating the reference picture.

When ARC is allowed, inter prediction may be performed based on reference pictures with different resolutions. The reference pictures may have different widths and/or heights of luma samples from the current picture. For inter prediction, the reference pictures may be resampled. The prediction samples of the current block in the current picture may be derived based on the motion vector of the current block and the resampled reference pictures.

### Embodiment

In the present disclosure, template matching may be a process of searching for a reference template with the highest similarity to a current template. According to the present disclosure, a template matching cost (TM cost) may be calculated to measure the similarity, and a cost function such as SAD may be used for this purpose. A high template matching cost may mean that the template matching error is large and therefore the similarity between templates is low. Conversely, a small template matching cost may mean that the template matching error is small and therefore the similarity between templates is high.

In the present disclosure, the cost function for calculating the template matching cost may be a function that uses a difference between a sample value in the current template and a corresponding sample value in the reference template. Therefore, the cost function may be referred to as a "difference(error)-based function" or "difference(error)-based equation" between corresponding samples in two templates. In addition, the template matching cost calculated by the cost function may be referred to as a "difference (error)-based function value" or "difference (error)-based value" between corresponding samples in two templates.

In the present disclosure, "cost" may be referred to as "error", "error", etc. That is, in the present disclosure, cost", "error" and "error" may have the same meaning. Therefore, the "cost function" may also be referred to as an "error function", "error function", etc. The cost may be derived based on the difference between the current template and the reference template and thus may correspond to the error value for the current block.

The present disclosure proposes a method of adaptively deriving an error value for a current block based on whether reference picture resampling (RPR) is applied to a reference picture. That is, the present disclosure proposes a method of adaptively deriving TM cost based on whether RPR is applied to a reference picture. Hereinafter, a reference picture to which RPR is applied is referred to as an "RPR reference picture," and a reference picture to which RPR is not applied is referred to as a "non-RPR reference picture."

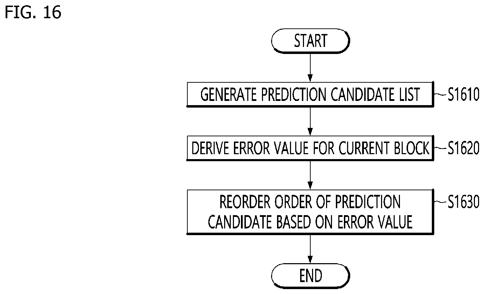

FIG. 16 is a flowchart illustrating an image encoding/decoding method according to an embodiment of the present disclosure.

Referring to FIG. 16, an image encoding apparatus 100 and an image decoding apparatus 200 may generate a prediction candidate list for a current block (S1610).

A prediction candidate may correspond to any one of a merge candidate, a TMVP (temporal motion vector prediction) candidate, a non-adjacent (NAMVP) candidate which is a prediction candidate that is not adjacent to the current block, an MMVD candidate, and an affine MMVD candidate. The prediction candidate list may correspond to any one of a merge candidate list including merge candidates, a TMVP candidate list including TMVP candidates, a non-adjacent candidate list (NAMVP candidate list) including NAMVP candidates, an MMVD candidate list including MMVD candidates, and an affine MMVD candidate list including affine MMVD candidates.

The image encoding apparatus 100 and the image decoding apparatus 200 may derive an error value for the current block (S1620). The error value may be a TM cost. The error value may be derived based on whether a reference picture referred to by a prediction candidate is an RPR reference picture. For example, if the reference picture is an RPR reference picture, the error value may be derived to be a predetermined value, and if the reference picture is a non-RPR reference picture, the error value may be derived based on a difference between a current template and a reference template. That is, if the reference picture is an RPR reference picture, the process of calculating the error value based on the difference between the current template and the reference template is not performed (bypassed), and the error value may be derived to be a predetermined value. Here, the predetermined value may be a maximum value determined in advance for the error value.

The image encoding apparatus 100 and the image decoding apparatus 200 may reorder prediction candidates based on the error value (S1630).

The reordering order of the prediction candidates may be ascending order according to the error value of each prediction candidate. In this case, if the error value for the RPR reference picture is derived to be a predetermined maximum value, the prediction candidate will have a lower priority than other prediction candidates (prediction candidates for non-RPR reference pictures). Therefore, the prediction candidate for the RPR reference picture may not be used for prediction of the current block.

In order to calculate the error value, a process of scaling a reference picture to the same size as the current picture and performing interpolation may be performed. However, the error occurring in this process may be relatively larger for an RPR reference picture than for a non-RPR reference picture. Therefore, as in the present disclosure, by lowering the priority of a prediction candidate for an RPR reference picture so that the prediction candidate is not used, the scaling and interpolation processes are not performed, and as a result, a large error occurring in the scaling and interpolation processes can be prevented in advance, and through this, the prediction of the current block can be implemented more accurately.

## Embodiment 1

In a conventional merge candidate reordering method, the TM cost (error value) of the merge candidate is set to 0 when the reference picture is an RPR reference picture and the process of calculating the TM cost is bypassed, thereby configuring the priority of the merge candidate to be higher than that of the merge candidate referring to a non-RPR reference picture.

However, according to the conventional merge candidate reordering method, in the process of scaling the RPR reference picture to the same size as the current picture and additionally performing interpolation in order to calculate the TM cost, the merge candidate of the RPR reference picture may have a higher error than the merge candidate of the non-RPR reference picture. Therefore, in order to solve the above problem, the present disclosure proposes a method of configuring a merge candidate of an RPR reference picture in the candidate list with the lowest order through Embodiment 1.

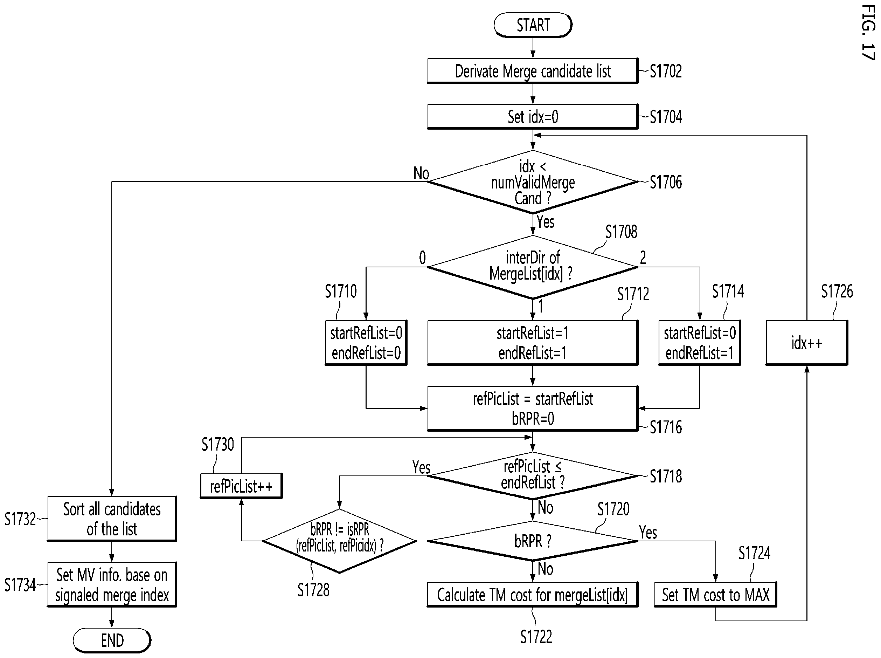

FIG. 17 is a flowchart illustrating an image encoding/decoding method according to Embodiment 1.

Referring to FIG. 17, the image encoding apparatus 100 and the image decoding apparatus 200 derive a merge candidate list (S1702), set the value of an index idx indicating one of the merge candidates in the merge candidate list to 0 (S1704), and then determine whether the merge candidate indicated by the index is the last merge candidate (i.e., the number of merge candidates, numValidMergeCand) in the merge candidate list (S1706).

If the merge candidate indicated by the index is not the last merge candidate, the image encoding apparatus 100 and the image decoding apparatus 200 may determine the prediction direction interDir of the merge candidate indicated by the index (S1708), and determine the values of the start reference list startRefList and the end reference list endRefList according to the determined direction (S1710 to S1714).

The image encoding apparatus 100 and the image decoding apparatus 200 may set the value of a variable refPicList to be equal to the value of the start reference list, and set the value of a variable bRPR indicating whether or not it is an RPR reference picture to 0 (S1716). In addition, the image encoding apparatus 100 and the image decoding apparatus 200 may determine whether or not the reference picture corresponding to refPicidx in refPicList is an RPR reference picture (S1728), and increase the value of the reference list by 1 (S1730) to set the next reference list as a determination target. The image encoding apparatus 100 and the image decoding apparatus 200 may determine whether or not each reference picture in each reference list is an RPR reference picture by performing steps S1728 and S1730 for all reference lists (S1718).

The image encoding apparatus 100 and the image decoding apparatus 200 may set the value of the TM cost of the corresponding merge candidate to a predetermined maximum value (S1724) when the reference picture is an RPR reference picture (S1720), and may calculate and derive the TM cost of the corresponding merge candidate (S1722) when the reference picture is a non-RPR reference picture (S1720).

The image encoding apparatus 100 and the image decoding apparatus 200 may repeatedly perform steps S1706 to S1724 for all merge candidates in the merge candidate list by performing steps S1706 to S1724 for the next merge candidate idx++ (S1726).

If steps S1706 to S1724 are all performed for all merge candidates in the merge candidate list (S1706), the image encoding apparatus 100 and the image decoding apparatus 200 may reorder the merge candidates based on the error value of each merge candidate in the merge candidate list (S1732). In this process, a merge candidate having a predetermined maximum value as an error value (a merge candidate referring to an RPR reference picture) may be reordered with a low priority. The image encoding apparatus 100 may determine a merge candidate to be used for prediction of a current block among the reordered merge candidates, and may encode and signal an index (merge index) indicating the determined merge candidate in a bitstream. The image decoding apparatus 200 may derive motion information based on the signaled merge index (S1734).

**Embodiment 2**

In the conventional TMVP candidate reordering method, the TM cost of all TMVP candidates was calculated without considering whether the reference picture is an RPR reference picture.

However, according to the conventional TMVP candidate reordering method, in the process of scaling the RPR reference picture to the same size as the current picture and additionally performing interpolation in order to calculate the TM cost, the TMVP candidate of the RPR reference picture may have a higher error than the TMVP candidate of the non-RPR reference picture. Therefore, in order to solve the above problem, the present disclosure proposes a method of configuring a TMVP candidate of an RPR reference picture in a candidate list with the lowest order through Embodiment 2.

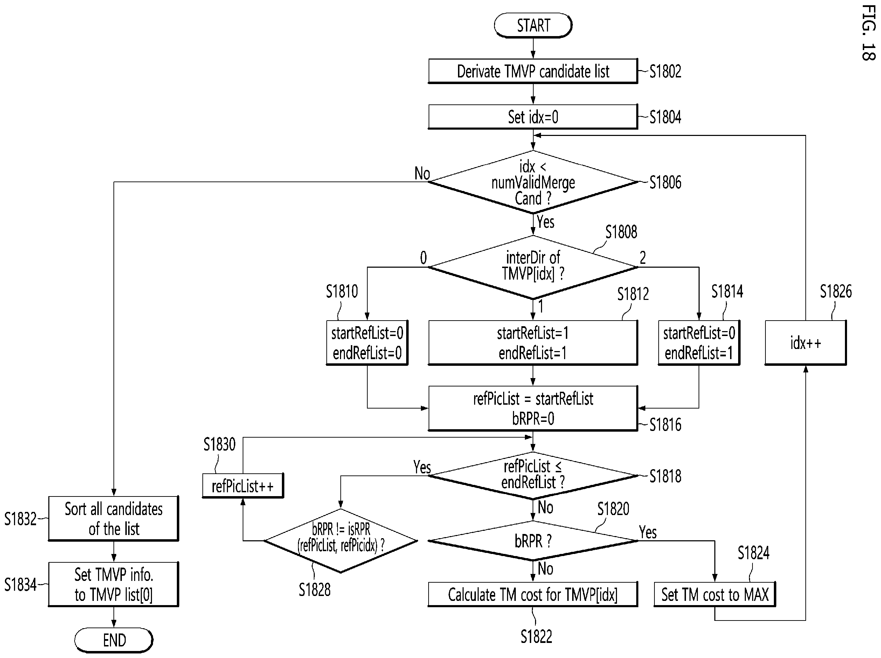

FIG. 18 is a flowchart illustrating an image encoding/decoding method according to Embodiment 2.

Referring to FIG. 18, the image encoding apparatus 100 and the image decoding apparatus 200 derive a TMVP candidate list (S1802), set the value of an index idx indicating one of the TMVP candidates in the TMVP candidate list to 0 (S1804), and then determine whether the TMVP candidate indicated by the index is the last TMVP candidate (i.e., the number of TMVP candidates, numValidMergeCand) in the TMVP candidate list (S1806).

If the TMVP candidate indicated by the index is not the last TMVP candidate, the image encoding apparatus 100 and the image decoding apparatus 200 may determine a prediction direction interDir of the TMVP candidate indicated by the index (S1808), and determine the values of the start reference list startRefList and the end reference list endRefList according to the determined direction (S1810 to S1814).

The image encoding apparatus 100 and the image decoding apparatus 200 may set the value of a variable refPicList to be equal to the value of the start reference list, and set the value of a variable (bRPR) indicating whether or not it is an RPR reference picture to 0 (S1816). In addition, the image encoding apparatus 100 and the image decoding apparatus 200 may determine whether or not the reference picture corresponding to refPicidx in refPicList is an RPR reference picture (S1828), and increase the value of the reference list by 1 (S1830) to set the next reference list as a determination target. The image encoding apparatus 100 and the image decoding apparatus 200 may determine whether or not each reference picture in each reference list is an RPR reference picture by performing steps S1828 and S1830 for all reference lists (S1818).

The image encoding apparatus 100 and the image decoding apparatus 200 may set the value of the TM cost of the corresponding TMVP candidate to a predetermined maximum value (S1824) when the reference picture is an RPR reference picture (S1820), and may calculate and derive the TM cost of the corresponding TMVP candidate (S1822) when the reference picture is a non-RPR reference picture (S1820).

The image encoding apparatus 100 and the image decoding apparatus 200 may repeatedly perform steps S1806 to S1824 for all TMVP candidates in the TMVP candidate list by performing steps S1806 to S1824 for the next TMVP candidate idx++ (S1826).

If all of steps S1806 to S1824 are performed for all TMVP candidates in the TMVP candidate list (S1806), the image encoding apparatus 100 and the image decoding apparatus 200 may reorder the TMVP candidates based on the error value of each TMVP candidate in the TMVP candidate list (S1832). In this process, a TMVP candidate having a predetermined maximum value as an error value (a TMVP candidate referring to an RPR reference picture) may be reordered with a low priority. The image encoding apparatus 100 and the image decoding apparatus 200 may determine a first TMVP candidate among the reordered TMVP candidates as the TMVP information of the current block (S1834).

## Embodiment 3

In the conventional NAMVP candidate reordering method, the TM cost of all NAMVP candidates was calculated without considering whether the reference picture is an RPR reference picture.

However, according to the conventional NAMVP candidate reordering method, in the process of scaling the RPR reference picture to the same size as the current picture and additionally performing interpolation in order to calculate the TM cost, the NAMVP candidate of the RPR reference picture may have a higher error than the NAMVP candidate of the non-RPR reference picture. Therefore, in order to solve the above problem, the present disclosure proposes a method of configuring a NAMVP candidate of an RPR reference picture in a candidate list with the lowest order through Embodiment 3.

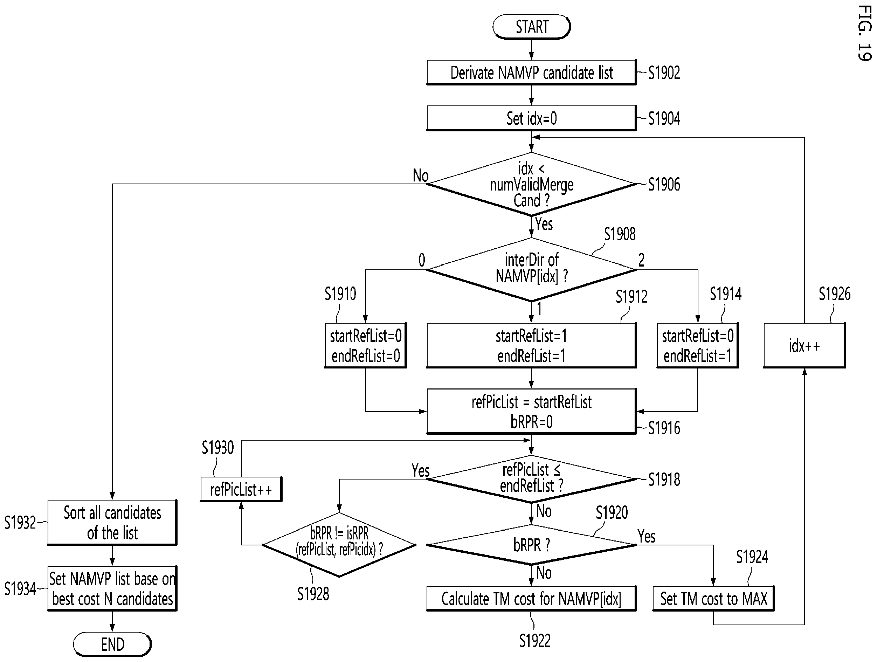

FIG. 19 is a flowchart illustrating an image encoding/decoding method according to Embodiment 3.

Referring to FIG. 19, the image encoding apparatus 100 and the image decoding apparatus 200 derive a NAMVP candidate list (S1902), set the value of an index idx indicating one of the NAMVP candidates in the NAMVP candidate list to 0 (S1904), and then determine whether the NAMVP candidate indicated by the index is the last NAMVP candidate (i.e., the number of NAMVP candidates, numValidMergeCand) in the NAMVP candidate list (S1906).

If the NAMVP candidate indicated by the index is not the last NAMVP candidate, the image encoding apparatus 100 and the image decoding apparatus 200 may determine a prediction direction interDir of the NAMVP candidate indicated by the index (S1908), and determine the values of the start reference list startRefList and the end reference list endRefList according to the determined direction (S1910 to S1914).

The image encoding apparatus 100 and the image decoding apparatus 200 may set the value of a variable refPicList to be equal to the value of the start reference list, and set the value of a variable bRPR indicating whether or not it is an RPR reference picture to 0 (S1916). In addition, the image encoding apparatus 100 and the image decoding apparatus 200 may determine whether or not the reference picture corresponding to refPicidx in refPicList is an RPR reference picture (S1928), and increase the value of the reference list by 1 (S1930) to set the next reference list as a determination target. The image encoding apparatus 100 and the image decoding apparatus 200 may determine whether or not each reference picture in each reference list is an RPR reference picture by performing steps S1928 and S1930 for all reference lists (S1918).

The image encoding apparatus 100 and the image decoding apparatus 200 may set the value of the TM cost of the corresponding NAMVP candidate to a predetermined maximum value (S1924) when the reference picture is an RPR reference picture (S1920), and may calculate and derive the TM cost of the corresponding NAMVP candidate (S1922) when the reference picture is a non-RPR reference picture (S1920).

The image encoding apparatus 100 and the image decoding apparatus 200 may repeatedly perform steps S1906 to S1924 for all NAMVP candidates in the NAMVP candidate list by performing steps S1906 to S1924 for the next NAMVP candidate idx++ (S1926).

If steps S1906 to S1924 are all performed for all NAMVP candidates in the NAMVP candidate list (S1906), the image encoding apparatus 100 and the image decoding apparatus 200 may reorder the NAMVP candidates based on the error value of each NAMVP candidate in the NAMVP candidate list (S1932). In this process, a NAMVP candidate having a predetermined maximum value as an error value (a NAMVP candidate referring to an RPR reference picture) may be reordered with a low priority. The image encoding apparatus 100 and the image decoding apparatus 200 may set the NAMVP list based on a predetermined number (N) of candidates having an optimal TM cost (S1934).

## Embodiment 4

In the conventional MMVD candidate reordering method and the affine MMVD candidate reordering method, TM cost was calculated for all prediction candidates without considering whether the reference picture of a base candidate is an RPR reference picture. Here, the prediction candidate may be derived from the motion information of the corresponding base candidate through MMVD and affine MMVD. In addition, in the conventional MMVD candidate reordering method and the affine MMVD candidate reordering method, 12.5% of MMVD candidates and 50% of affine MMVD candidates were signaled in the ascending order of the calculated TM cost.

However, according to the conventional MMVD candidate reordering method and the affine MMVD candidate reordering method, in the process of scaling the RPR reference picture to the same size as the current picture and additionally performing interpolation to calculate the TM cost, the error of the RPR reference picture may be larger than that of the non-RPR reference picture. Therefore, in order to solve the above problem, the present disclosure proposes a method of configuring an MMVD candidate and an affine MMVD candidate in a candidate list with the lowest order when a reference picture of a base candidate is an RPR reference picture through Embodiment 4. Hereinafter, Embodiment 4 will be described focusing on the MMVD candidate, but Embodiment 4 may also be applied to the affine MMVD candidate.

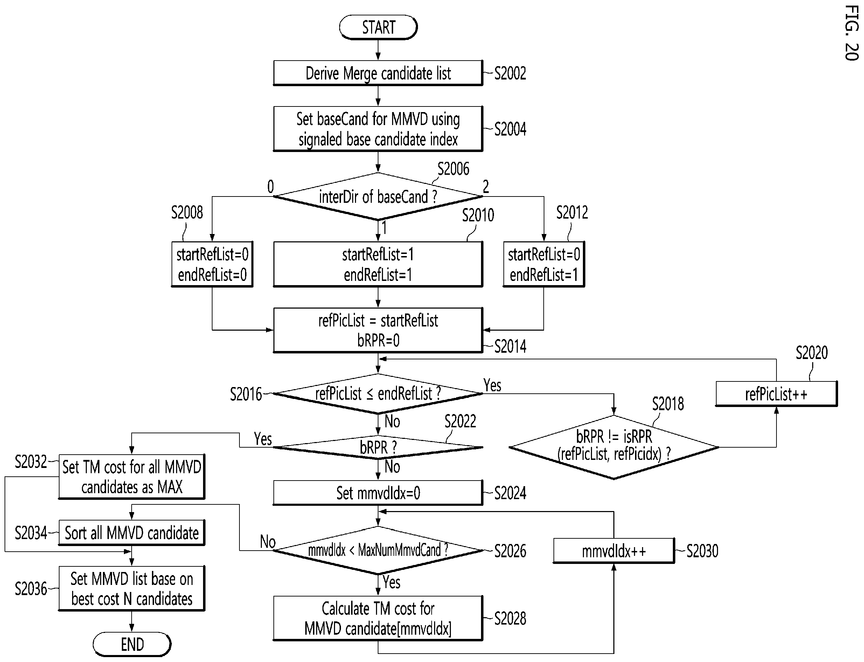

FIG. 20 is a flowchart illustrating an image encoding/decoding method according to Embodiment 4.

Referring to FIG. 20, the image encoding apparatus 100 and the image decoding apparatus 200 may derive a merge candidate list (S2002). The image encoding apparatus 100 may set a base candidate (baseCand) for MMVD and may encode and signal an index (base candidate index) for the set base candidate in a bitstream. The image decoding apparatus 200 may set a base candidate for MMVD using the signaled base candidate index (S2004). The base candidate may represent any one of the merge candidates in the merge candidate list. The merge candidate list may be referred to as a "first prediction candidate list", and the base candidate may be referred to as a "first prediction candidate".

The image encoding apparatus 100 and the image decoding apparatus 200 may determine a prediction direction interDir of the base candidate (S2006), and may determine the values of the start reference list startRefList and the end reference list endRefList according to the determined direction (S2008 to S2010).

The image encoding apparatus 100 and the image decoding apparatus 200 may set the value of a variable refPicList to be equal to the value of the start reference list, and set the value of a variable bRPR indicating whether it is an RPR reference picture to 0 (S2014). In addition, the image encoding apparatus 100 and the image decoding apparatus 200 may determine whether the reference picture corresponding to refPicidx in refPicList is an RPR reference picture (S2018), and increase the value of the reference list by 1 (S2020) to set the next reference list as a determination target. The image encoding apparatus 100 and the image decoding apparatus 200 may determine whether each reference picture in each reference list is an RPR reference picture by performing steps S2018 and S2020 for all reference lists (S2016).

The image encoding apparatus 100 and the image decoding apparatus 200 may set the value of the TM cost of the MMVD candidates for the base candidate to a predetermined maximum value (S2032) when the reference picture of the base candidate is an RPR reference picture (S2022).

In contrast, when the reference picture of the base candidate is a non-RPR reference picture (S2022), the image encoding apparatus 100 and the image decoding apparatus 200 may set the mmvdIdx, which is an index indicating the MMVD candidate, to an initial value (0) (S2024), and then calculate the value of the TM cost for all MMVD candidates for the base candidate (S2026, S2030) (S2028). In addition, the image encoding apparatus 100 and the image decoding apparatus 200 may reorder all the MMVD candidates based on the calculated value of the TM cost (S2034).

The image encoding apparatus 100 and the image decoding apparatus 200 may set an MMVD list based on a predetermined number (N) of MMVD candidates having an optimal TM cost among the MMVD candidates where the value of the TM cost is set to a predetermined maximum value through step S2032 and the MMVD candidates reordered through step S2034 (S2036).

The MMVD candidate may be referred to as a "second prediction candidate", and the MMVD list may be referred to as a "second prediction candidate list". The MMVD candidate may be derived by applying an offset to the base candidate.

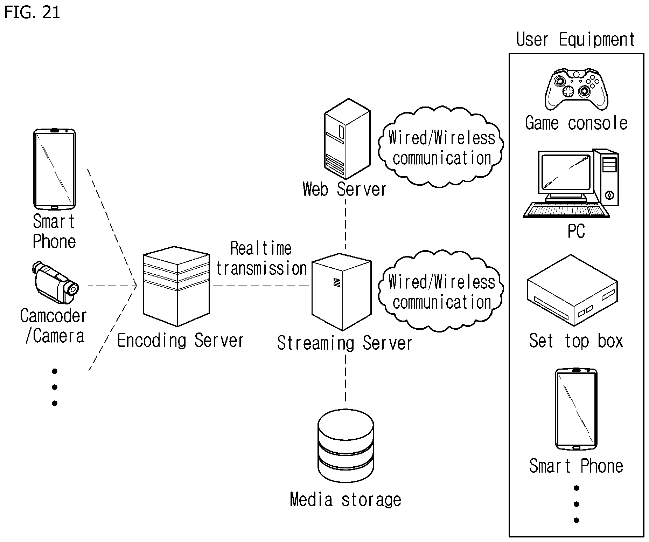

FIG. 21 is a view showing a content streaming system, to which an embodiment of the present disclosure is applicable.

As shown in FIG. 21, the content streaming system, to which the embodiment of the present disclosure is applied, may largely include an encoding server, a streaming server, a web server, a media storage, a user device, and a multimedia input device.

The encoding server compresses content input from multimedia input devices such as a smartphone, a camera, a camcorder, etc. into digital data to generate a bitstream and transmits the bitstream to the streaming server. As another example, when the multimedia input devices such as smartphones, cameras, camcorders, etc. directly generate a bitstream, the encoding server may be omitted.

The bitstream may be generated by an image encoding method or an image encoding apparatus, to which the embodiment of the present disclosure is applied, and the streaming server may temporarily store the bitstream in the process of transmitting or receiving the bitstream.

The streaming server transmits the multimedia data to the user device based on a user's request through the web server, and the web server serves as a medium for informing the user of a service. When the user requests a desired service from the web server, the web server may deliver it to a streaming server, and the streaming server may transmit multimedia data to the user. In this case, the content streaming system may include a separate control server. In this case, the control server serves to control a command/response between devices in the content streaming system.

The streaming server may receive content from a media storage and/or an encoding server. For example, when the content are received from the encoding server, the content may be received in real time. In this case, in order to provide a smooth streaming service, the streaming server may store the bitstream for a predetermined time.

Examples of the user device may include a mobile phone, a smartphone, a laptop computer, a digital broadcasting terminal, a personal digital assistant (PDA), a portable multimedia player (PMP), navigation, a slate PC, tablet PCs, ultrabooks, wearable devices (e.g., smartwatches, smart glasses, head mounted displays), digital TVs, desktops computer, digital signage, and the like.

Each server in the content streaming system may be operated as a distributed server, in which case data received from each server may be distributed.

The scope of the disclosure includes software or machine-executable commands (e.g., an operating system, an application, firmware, a program, etc.) for enabling operations according to the methods of various embodiments to be executed on an apparatus or a computer, a non-transitory computer-readable medium having such software or commands stored thereon and executable on the apparatus or the computer.

**Industrial Applicability**

The embodiments of the present disclosure may be used to encode or decode an image.

**Claims**

1. An image decoding method performed by an image decoding apparatus, the image decoding method comprising:

   constructing a prediction candidate list for a current block;
   deriving an error value for the current block based on whether a reference picture referred to by a prediction candidate in the prediction candidate list is a resampled reference picture; and
   reordering the order of the prediction candidate in the prediction candidate list based on the error value,
   wherein the error value is derived to be a predetermined value based on the reference picture being the resampled reference picture.

2. The image decoding method of claim 1,

   wherein the order of the prediction candidate in the prediction candidate list are reordered in ascending order based on the error value, and
   wherein the error value is derived to be a predetermined maximum value based on the reference picture being the resampled reference picture.

3. The image decoding method of claim 1, wherein the error value is derived based on a difference between a template of the current block and a reference template in the reference picture, based on the reference picture being not the resampled reference picture.

4. The image decoding method of claim 1, wherein the prediction candidate is any one of a merge candidate of the current block, a temporal candidate of the current block or a non-adjacent candidate of the current block.

5. The image decoding method of claim 1,

   wherein the prediction candidate includes a first prediction candidate and a second prediction candidate obtained by applying an offset to the first prediction candidate,
   wherein the prediction candidate list includes a first prediction candidate list including the first prediction candidate and a second prediction candidate list including the second prediction candidate,

wherein the constructing comprises constructing the first prediction candidate list,

wherein the deriving comprises deriving an error value between the current block and the second prediction candidate based on a reference picture referred to by the first prediction candidate being not the resampled reference picture, and

wherein the reordering comprises reordering the order of the second prediction candidate in the second prediction candidate list based on the error value.

6. An image encoding method performed by an image encoding apparatus, the image encoding method comprising:

constructing a prediction candidate list for a current block;

deriving an error value for the current block based on whether a reference picture referred to by a prediction candidate in the prediction candidate list is a resampled reference picture; and

reordering the order of the prediction candidate in the prediction candidate list based on the error value,

wherein the error value is derived to be a predetermined value based on the reference picture being the resampled reference picture.

7. A method of transmitting a bitstream generated by an image encoding method, the image encoding method comprising:

constructing a prediction candidate list for a current block;

deriving an error value for the current block based on whether a reference picture referred to by a prediction candidate in the prediction candidate list is a resampled reference picture; and

reordering the order of the prediction candidate in the prediction candidate list based on the error value,

wherein the error value is derived to be a predetermined value based on the reference picture being the resampled reference picture.

FIG. 1

FIG. 2

FIG. 3

FIG. 4

PREDICTION MODE INFORMATION
INFORMATION REGARDING
MOTION INFORMATION

ORIGINAL PICTURE

180

181 PREDICTION MODE
DETERMINATION UNIT

182 MOTION INFORMATION
DERIVATION UNIT

REFERENCE PICTURE

183 PREDICTION SAMPLE
DERIVATION UNIT

PREDICTION SAMPLE

INTER PREDICTION UNIT

FIG. 5

START

S510
PERFORM PREDICTION (DETERMINE
INTER PREDICTION MODE, DERIVE
MOTION INFORMATION, AND
GENERATE PREDICTION SAMPLES

S520
DERIVE RESIDUAL SAMPLES
BASED ON PREDICTION SAMPLES

S530
ENCODE IMAGE INFORMATION
INCLUDING PREDICTION INFORMATION
AND RESIDUAL INFORMATION

END

FIG. 6

FIG. 7

FIG. 8

```
        ┌──────────┐
        │  START   │
        └────┬─────┘
             │                       S810
             ▼
  ┌─────────────────────────────────┐
  │ DETERMINE INTER PREDICTION MODE │
  └────────────────┬────────────────┘
                   │                 S820
                   ▼
  ┌─────────────────────────────────┐
  │     DERIVE MOTION INFORMATION    │
  └────────────────┬────────────────┘
                   │                 S830
                   ▼
  ┌─────────────────────────────────┐
  │    PERFORM PREDICTION BASED ON   │
  │        MOTION INFORMATION        │
  │   (GENERATE PREDICTION SAMPLE)   │
  └────────────────┬────────────────┘
                   │
                   ▼
             ┌──────────┐
             │   END    │
             └──────────┘
```

FIG. 9

L0 reference          L1 reference

FIG. 10

Translate

Scale

Rotate

Shear

FIG. 11

FIG. 12

FIG. 13

FIG. 14

Reference samples of the template
in reference list 0 (RT0)

Template (T)

Reference samples of the template
in reference list 1 (RT1)

Reference block

Current block

Reference block

MV of the merge candidate
in reference list 0

MV of the merge candidate
in reference list 1

Reference picture in reference list 0

Current picture

Reference picture in reference list 1

FIG. 15

Template (T)

| A | B | C | D |
| E | | | |
| F | Current block | | |
| G | | | |

Current picture

Constitute the above
reference template

A_ref    B_ref    C_ref    D_ref

Constitute
the left
reference
template

E_ref
F_ref
G_ref

| A | B | C | D |
| E | | | |
| F | Collocated block | | |
| G | | | |

Reference picture

FIG. 16

```
                    ( START )
                        │
                        ▼
   ┌──────────────────────────────────────┐
   │   GENERATE PREDICTION CANDIDATE LIST  │──S1610
   └──────────────────────────────────────┘
                        │
                        ▼
   ┌──────────────────────────────────────┐
   │  DERIVE ERROR VALUE FOR CURRENT BLOCK │──S1620
   └──────────────────────────────────────┘
                        │
                        ▼
   ┌──────────────────────────────────────┐
   │       REORDER ORDER OF PREDICTION     │──S1630
   │    CANDIDATE BASED ON ERROR VALUE     │
   └──────────────────────────────────────┘
                        │
                        ▼
                    ( END )
```

FIG. 17

FIG. 18

EP 4 510 564 A1

START

Derivate TMVP candidate list — S1802

Set idx=0 — S1804

idx < numValidMerge Cand ? — S1806
No / Yes

interDir of TMVP[idx] ? — S1808
0 / 1 / 2

S1810
startRefList=0
endRefList=0

S1812
startRefList=1
endRefList=1

S1814
startRefList=0
endRefList=1

S1826
idx++

refPicList = startRefList
bRPR=0 — S1816

S1830
refPicList++

refPicList ≤ endRefList ? — S1818
Yes / No

bRPR != isRPR (refPicList, refPicidx) ? 
S1828

bRPR ? — S1820
No / Yes

Calculate TM cost for TMVP[idx]
S1822

Set TM cost to MAX
S1824

S1832 — Sort all candidates of the list

S1834 — Set TMVP info. to TMVP list[0]

END

34

FIG. 19

START

Derivate NAMVP candidate list — S1902

Set idx=0 — S1904

idx < numValidMerge Cand ? — S1906
No / Yes

interDir of NAMVP[idx] ? — S1908
0 / 1 / 2

startRefList=0
endRefList=0 — S1910

startRefList=1
endRefList=1 — S1912

startRefList=0
endRefList=1 — S1914

idx++ — S1926

refPicList = startRefList
bRPR=0 — S1916

refPicList++ — S1930

refPicList ≤ endRefList ? — S1918
Yes / No

bRPR != isRPR (refPicList, refPicidx) ? — S1928

bRPR ? — S1920
No / Yes

Calculate TM cost for NAMVP[idx] — S1922

Set TM cost to MAX — S1924

Sort all candidates of the list — S1932

Set NAMVP list base on best cost N candidates — S1934

END

EP 4 510 564 A1

35

FIG. 20

FIG. 21

## INTERNATIONAL SEARCH REPORT

| | International application No. |
|---|---|
| | **PCT/KR2023/004932** |

**A. CLASSIFICATION OF SUBJECT MATTER**

**H04N 19/105**(2014.01)i; **H04N 19/176**(2014.01)i; **H04N 19/132**(2014.01)i; **H04N 19/88**(2014.01)i

According to International Patent Classification (IPC) or to both national classification and IPC

**B. FIELDS SEARCHED**

Minimum documentation searched (classification system followed by classification symbols)

H04N 19/105(2014.01); H04N 19/103(2014.01); H04N 19/11(2014.01); H04N 19/117(2014.01); H04N 19/132(2014.01); H04N 19/159(2014.01); H04N 19/517(2014.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 현재 블록(current block), 예측(prediction), 후보(candidate), 리스트(list), 참조 픽처(reference picture), 리샘플링(resampling), 재배열(reordering), 오차(error)

**C. DOCUMENTS CONSIDERED TO BE RELEVANT**

| Category* | Citation of document, with indication, where appropriate, of the relevant passages | Relevant to claim No. |
|---|---|---|
| Y<br>A | CHANG, Yao-Jen et al. EE2-3.4, EE2-3.5, EE2-3.6: Experimental results of the MV candidates reordering in candidate types based on template matching costs. Joint Video Experts Team (JVET) of ITU-T SG 16 WP 3 and ISO/IEC JTC 1/SC 29 25th Meeting, by teleconference, JVET-Y0134r2. 12 January 2022.<br>    See pages 1-3. | 1-4,6-7<br><br>5 |
| Y | KR 10-2020-0128586 A (FRAUNHOFER-GESELLSCHAFT ZUR FÖRDERUNG DER ANGEWANDTEN FORSCHUNG E. V.) 13 November 2020 (2020-11-13)<br>    See claim 1. | 1-4,6-7 |
| A | US 2021-0014478 A1 (QUALCOMM INCORPORATED) 14 January 2021 (2021-01-14)<br>    See paragraphs [0005]-[0028]; and claims 1-26. | 1-7 |
| A | KR 10-2022-0006064 A (BEIJING BYTEDANCE NETWORK TECHNOLOGY CO., LTD. et al.) 14 January 2022 (2022-01-14)<br>    See paragraphs [0006]-[0021]; and claims 1-6. | 1-7 |

☑ Further documents are listed in the continuation of Box C.    ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **12 July 2023** | **13 July 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

International application No.

**PCT/KR2023/004932**

### C.    DOCUMENTS CONSIDERED TO BE RELEVANT

| Category* | Citation of document, with indication, where appropriate, of the relevant passages | Relevant to claim No. |
|---|---|---|
| A | KR 10-2020-0066737 A (LG ELECTRONICS INC.) 10 June 2020 (2020-06-10)<br>See paragraphs [0009]-[0012]; and claims 1-15. | 1-7 |

Form PCT/ISA/210 (second sheet) (July 2022)

## INTERNATIONAL SEARCH REPORT
### Information on patent family members

International application No.

**PCT/KR2023/004932**

| Patent document cited in search report | | | Publication date (day/month/year) | Patent family member(s) | | | Publication date (day/month/year) |
|---|---|---|---|---|---|---|---|
| KR | 10-2020-0128586 | A | 13 November 2020 | CN | 112204963 | A | 08 January 2021 |
| | | | | EP | 3777141 | A1 | 17 February 2021 |
| | | | | JP | 2021-519542 | A | 10 August 2021 |
| | | | | JP | 7217288 | B2 | 02 February 2023 |
| | | | | KR | 10-2023-0057481 | A | 28 April 2023 |
| | | | | TW | 201946455 | A | 01 December 2019 |
| | | | | US | 11601672 | B2 | 07 March 2023 |
| | | | | US | 2021-0014531 | A1 | 14 January 2021 |
| | | | | WO | 2019-185808 | A1 | 03 October 2019 |
| US | 2021-0014478 | A1 | 14 January 2021 | AU | 2020-311851 | A1 | 27 January 2022 |
| | | | | EP | 3997873 | A1 | 18 May 2022 |
| | | | | IL | 289255 | A | 01 February 2022 |
| | | | | JP | 2022-539455 | A | 09 September 2022 |
| | | | | KR | 10-2022-0030988 | A | 11 March 2022 |
| | | | | TW | 202110178 | A | 01 March 2021 |
| | | | | US | 11563933 | B2 | 24 January 2023 |
| | | | | WO | 2021-007048 | A1 | 14 January 2021 |
| KR | 10-2022-0006064 | A | 14 January 2022 | CN | 113826386 | A | 21 December 2021 |
| | | | | EP | 3949388 | A1 | 09 February 2022 |
| | | | | EP | 4029245 | A1 | 20 July 2022 |
| | | | | JP | 2022-531965 | A | 12 July 2022 |
| | | | | JP | 2022-552511 | A | 16 December 2022 |
| | | | | KR | 10-2022-0073752 | A | 03 June 2022 |
| | | | | SG | 11202112279 | A | 30 December 2021 |
| | | | | US | 11575887 | B2 | 07 February 2023 |
| | | | | US | 2022-0060692 | A1 | 24 February 2022 |
| | | | | US | 2022-0248061 | A1 | 04 August 2022 |
| | | | | US | 2023-0133338 | A1 | 04 May 2023 |
| | | | | WO | 2020-228659 | A1 | 19 November 2020 |
| | | | | WO | 2020-228660 | A1 | 19 November 2020 |
| | | | | WO | 2021-068954 | A1 | 15 April 2021 |
| KR | 10-2020-0066737 | A | 10 June 2020 | US | 11057640 | B2 | 06 July 2021 |
| | | | | US | 2020-0296414 | A1 | 17 September 2020 |
| | | | | WO | 2019-107916 | A1 | 06 June 2019 |

Form PCT/ISA/210 (patent family annex) (July 2022)